(19) Europäisches Patentamt
European Patent Office
Office européen des brevets

(11) **EP 2 051 463 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(51) Int Cl.:
***H04L 25/03*** *(2006.01)*

(21) Anmeldenummer: **08016282.9**

(22) Anmeldetag: **16.09.2008**

(54) **Verfahren und Vorrichtung zur Detektion von gesendeten Symbolen in einem Multi-Layer-Übertragungssystem**

Device and method for detecting sent symbols in a multi-layer transmission system

Procédé et dispositif de détection de symboles émis dans un système de transmission multicouches

(84) Benannte Vertragsstaaten:
**DE ES FR IT NO**

(30) Priorität: **15.10.2007 DE 102007049399**
**05.03.2008 DE 102008012590**

(43) Veröffentlichungstag der Anmeldung:
**22.04.2009 Patentblatt 2009/17**

(73) Patentinhaber: **Rohde & Schwarz GmbH & Co. KG**
**81671 München (DE)**

(72) Erfinder: **Detert, Torben**
**80634 München (DE)**

(74) Vertreter: **Körfer, Thomas**
**Mitscherlich & Partner**
**Patent- und Rechtsanwälte**
**Sonnenstrasse 33**
**80331 München (DE)**

(56) Entgegenhaltungen:
- **DAVID L MILLINER; JOHN R BARRY: "A layer-adaptive M algorithm for multiple-input multiple-output channel detection" SIGNAL PROCESSING ADVANCES IN WIRELESS COMMUNICATIONS, 2007. SPAWC 2007. IEEE 8TH WORKSHOP ON, Juni 2007 (2007-06), Seiten 1-5, XP002515764**
- **CHIN W H ED - KALANTZIS E I ET AL: "QRD Based Tree Search Data Detection for MIMO Communication Systems" VEHICULAR TECHNOLOGY CONFERENCE, 2005. VTC 2005-SPRING. 2005 IEEE 61ST, IEEE, PISCATAWAY, NJ, USA, Bd. 3, 30. Mai 2005 (2005-05-30), Seiten 1624-1627, XP010855698 ISBN: 978-0-7803-8887-1**
- **"Performance Analysis of a Fixed-Complexity Sphere Decoder in High-Dimensional Mimo Systems" ACOUSTICS, SPEECH AND SIGNAL PROCESSING, 2006. ICASSP 2006 PROCEEDINGS . 2006 IEEE INTERNATIONAL CONFERENCE ON TOULOUSE, FRANCE 14-19 MAY 2006, PISCATAWAY, NJ, USA,IEEE, 1. Januar 2006 (2006-01-01), Seiten IV-IV, XP031101271 ISBN: 978-1-4244-0469-8**

**Beschreibung**

Die Erfindung betrifft ein Verfahren und eine Vorrichtung zur Detektion von gesendeten Symbolen in einem Multi-Layer-Übertragungssystem mit reduzierter Zweigmetrikberechnung.

Zukünftige multimediale Anwendungen in der Kommunikationstechnik erfordern zunehmend eine Erhöhung der Datenrate. Die Bewältigung dieses hohen Datenaufkommens erfolgt zukünftig durch Mehrantennen-Systeme, die die räumliche Trennung von Übertragungssignalen ermöglichen und somit die parallele Übertragung mehrerer Datenströme im gleichen Frequenzband oder den räumlichen Vielfachzugriff auf das Übertragungsmedium (sogenanntes Space-Division-Multiple-Access (SDMA)) erlauben.

Bei der parallelen Übertragung mehrerer Datenströme zur gleichen Zeit und im gleichen Frequenzband in einem Multi-Layer-Übertragungssystem - beispielsweise im V-Blast-Übertragungssystem (Bell-Labs-Layered-Space-Time-Vertical-Encoding) - wird das zu übertragende Datenvolumen auf mehrere Datenströme aufgeteilt, die jeweils einer der insgesamt $N_t$ Sendeantennen zugeführt werden. Die $N_t$ verschiedenen Datenströme, die jeweils von einer der $N_t$ Sendeantennen abgestrahlt werden, überlagern sich in den insgesamt $N_r$ Datenströmen, die jeweils von einer der $N_r$ Empfangsantennen empfangen werden.

Diese Überlagerung der einzelnen Sendesignale in jedem der einzelnen Empfangssignale lässt sich mit der zeitlichen Überlagerung von Datensymbolen in einem Empfangssignal bei Intersymbol-Interferenz (ISI) behafteten Übertragungskanälen vergleichen. Analog zur Kanalschätzung und darauf aufbauenden zeitlichen Entzerrung mithilfe eines Sequenzschätzers im Fall von Intersymbol-Interferenz (ISI) behafteten Übertragungskanälen ist in einem Multi-Layer-Übertragungssystem eine Schätzung der insgesamt $N_t \cdot N_r$ Übertragungskanäle zwischen den $N_t$ Sendeantennen und den $N_r$ Empfangsantennen und eine darauf aufbauende räumliche Entzerrung der von den insgesamt N, Sendeantennen in den N, Layern jeweils übertragenen Datenströmen erforderlich.

Analog zur zeitlichen Entzerrung stellt der Maximum-Likelihood-Sequence-Estimator (MLSE), der beispielsweise in der EP 1 246 418 A2 beschrieben ist und die euklidische Distanz zwischen dem Vektor der Empfangssignale $\underline{r}$ und dem mit der Übertragungsmatrix H gewichteten Vektor aller möglichen Hypothesen $\underline{\tilde{s}}$ der Sendesignale $\underline{s}$ ermittelt, den derzeit besten Detektor dar.

Bei einer effizienten Berechnung des Maximum-Likelihood-Sequence-Estimators mithilfe des Viterbi-Algorithmuses sind hierzu bei einer Mächtigkeit $|S|$ des verwendeten

Modulationsalphabets S insgesamt $|S|^{N_t}$ euklidische Distanzen bzw. Zweige im Baum- oder Trellis-Diagramm sowie insgesamt $|S|^{N_t-1}$ Zustände zu berechnen, was in Echtzeit auch bei einer geringen Anzahl $N_t$ von Sendeantennen nicht möglich ist.

In D.L. Milliner et al. "A layer adaptive M algorithm for multiple-input multiple-output channel detection", 8th IEEE Workshop on Signal Processing Advances in Wireless Communications, 2007, SPAWC 2007, wird ein Detektor beschrieben, der einen M-Algorithmus mit einer Metrik verwendet, die eine mittels QR-Zerlegung triangularisierte Kanalübertragungsmatrix mit unterer Dreiecksstruktur aufweist.

Ein äquivalenten Detektor, der einen M-Algorithmus mit einer Metrik verwendet, die eine mittels QR-Zerlegung triangularisierte Kanalübertragungsmatrix mit oberer Dreiecksstruktur aufweist, ist aus W.J. Chin "QRD Based Tree Search Data Dtection for MIMO Communication Systems", 61th IEEE Vehicular Technology Conference, 2005, VTC 2005-Spring, Piscataway, NJ, USA, Band 3, Seiten 1624 - 1627, bekannt.

Ein sphärischer Detektor, der zur Schätzung das Empfangssymbol mit einer gegenüber der Mächtigkeit des Symbolalphabets reduzierten Anzahl von Symbolhypothesen vergleicht, geht aus L.G. Barbero et al. "Performance Analysis of a Fixed-complexity a Sphere Decoder in High-Dimensional MIMO Systems", International IEEE Conference on Acoustics, Speech and Signal Proceedings, 2006, ICASSP 2006, Toulouse, France, 14.- 19. Mai 2006, Piscataway, NJ, USA, IEEE, 1. Januar 2006, Seiten IV 557 - IV 559, hervor.

Aufgabe der Erfindung ist es deshalb, ein Verfahren und eine Vorrichtung zur räumlichen Entzerrung von mehreren, in mehreren Empfangssignalen überlagerten Sendesignalen in einer Multi-Layer-Übertragung zu schaffen, das bzw. die einen deutlich geringeren Verarbeitungsaufwand gegenüber dem Maximum-Likelihood-Sequence-Estimator bei Verwendung des Viterbi-Algorithmuses aufweist, ohne wesentliche Einbussen in der Qualität des Detektionsergebnisses zu erleiden.

Die Aufgabe wird bezüglich des Verfahrens durch die Merkmale des Anspruchs 1 oder des Anspruchs 2 und bezüglich der Vorrichtung durch die Merkmale des Anspruchs 7 gelöst. Die Unteransprüche betreffen vorteilhafte Weiterbildungen.

Erfindungsgemäß werden entsprechend den $N_t$ Gleichungen des die Übertragung zwischen den $N_t$ Sendeantennen und den $N_r$ Empfangsantennen beschreibenden Gleichungssystems $N_t$ Layer (Schichten) eingeführt, in denen die von den $N_t$ Sendeantennen gesendeten Symbole $s_1,..,s_k,..,s_{Nt}$ geschätzt werden.

Hierzu wird für eine bevorzugte erste Ausführungsform der Erfindung die Übertragungskanalmatrix H zwischen den $N_t$ Sendeantennen und den $N_r$ Empfangsantennen über eine $Q \cdot R$-Zerlegung in eine orthogonale Matrix $Q^H$ und eine obere Dreiecksmatrix R zerlegt.

Anschließend werden bevorzugt folgende Verfahrensschritte durchgeführt:

- Berechnen einer Anzahl $M$ von groben Schätzwerten $\tilde{s}_k^{(1)},...,\tilde{s}_k^{(a)},...,\tilde{s}_k^{(M)}$ für das in einem Layer $k$ geschätzte Symbol $s_k$ durch Entzerren von in einen Layer $k$ transformierten empfangenen Symbolen $r_1,..,r_k,..,r_{Nr}$ von in den Layer $k$ transformierten und in jeweils einem Pfad $a$ im Baum- oder Trellis-Diagramm vorausgehenden und bereits ermittelten exakteren Schätzwerten $\hat{s}_1^{(1)},...,\hat{s}_{k-1}^{(1)},..,\hat{s}_1^{(a)},...,\hat{s}_{k-1}^{(a)},...,\hat{s}_{k-1}^{(M)}...,\hat{s}_{Nt}^{(M)}$ für in einem Layer $k+1$ bis $N_t$ geschätzte Symbole $S_{k+1}..,S_{Nt}$,
- Ermitteln einer Voronoi-Region $V(\tilde{s}_k^{(1)}),..,V(\tilde{s}_k^{(a)}),..,V(\tilde{s}_k^{(M)})$ im Zustandsdiagramm für jeden im Layer $k$ ermittelten groben Schätzwert $\tilde{s}_k^{(1)},..,\tilde{s}_k^{(a)},..,\tilde{s}_k^{(M)}$, in dessen Zentrum der jeweilige grobe Schätzwert $\tilde{s}_k^{(1)},..,\tilde{s}_k^{(a)},..,\tilde{s}_k^{(M)}$ liegt, mit einer gegenüber der Anzahl $M$ reduzierten Anzahl P von Symbolhypothesen $\overline{\underline{S}}_k^{(1)},...,\overline{\underline{S}}_k^{(a)},...,\overline{\underline{S}}_k^{(M)}$ für das im Layer $k$ geschätzte Symbol $s_k$,
- Ermitteln jeweils einer euklidischen Distanz $\underline{d}_k^{(1)},..,\underline{d}_k^{(a)},..,\underline{d}_k^{(M)}$ zwischen jedem einzelnen groben Schätzwert $\tilde{s}_k^{(1)},..,\tilde{s}_k^{(a)},..,\tilde{s}_k^{(M)}$ des im Layer $k$ geschätzten Symbols $s_k$ und allen in der zugehörigen Voronoi-Region $V(\tilde{s}_k^{(1)}),..,V(\tilde{s}_k^{(a)}),..,V(\tilde{s}_k^{(M)})$ gelegenen Symbolhypothesen $\overline{\underline{S}}_k^{(1)},...,\overline{\underline{S}}_k^{(a)},...,\overline{\underline{S}}_k^{(M)}$ und Ermitteln einer Pfadmetrik $\underline{M}_k^{(1)},..,\underline{M}_k^{(a)},..,\underline{M}_k^{(M)}$ für jede einzelne Symbolhypothese $\overline{\underline{S}}_k^{(1)},...,\overline{\underline{S}}_k^{(a)},...,\overline{\underline{S}}_k^{(M)}$ im Layer $k$ durch Addition der jeweils ermittelten euklidischen Distanz $\underline{d}_k^{(1)},..,\underline{d}_k^{(a)},..,\underline{d}_k^{(M)}$ und einer Pfadmetrik $\underline{M}_{k+1}^{(1)},..,\underline{M}_{k+1}^{(a)},..,\underline{M}_{k+1}^{(M)}$ aus aufsummierten minimalen euklidischen Distanzen $\underline{d}_{k+1}^{(1)},..,\underline{d}_{k+1}^{(a)},..,\underline{d}_{k+1}^{(M)},..,\underline{d}_{Nt}^{(1)},..,\underline{d}_{Nt}^{(a)},..,\underline{d}_{Nt}^{(M)}$ zwischen im jeweiligen Pfad $a$ vorausgehenden exakteren Schätzwerten $\hat{s}_{k+1}^{(a)},..,\hat{s}_{Nt}^{(a)}$ und groben Schätzwerten $\tilde{s}_{k+1}^{(a)},..,\tilde{s}_{Nt}^{(a)}$ für im Layer $k+1$ bis $N_t$ geschätzte Symbole $s_{k+1},..,s_{Nt}$,
- Ermitteln von bis zu $M$ exakteren Schätzwerten $\hat{s}_k^{(1)},..,\hat{s}_k^{(a)},..,\hat{s}_k^{(M)}$ für das im Layer $k$ geschätzte Symbol $s_k$ als die zu den jeweils $M$ kleinsten Pfadmetriken $M_{k,p}^{(a)}$ gehörigen Symbolhypothesen $\overline{\underline{S}}_{k,p}^{(a)}$ aus allen im Layer $k$ berechneten Pfadmetriken $\underline{M}_k^{(1)},..,\underline{M}_k^{(a)},..,\underline{M}_k^{(M)}$ und
- Ermitteln von optimalen Schätzwerten $\tilde{\underline{s}}$ für die in allen Layern geschätzten Symbole $\underline{s}$ als die zum Pfad $a$ mit minimaler Pfadmetrik $M_{1,p}^{(a)}$ im Layer 1 gehörigen exakteren Schätzwerte $\hat{\underline{s}}^{(a)}$ der in allen Layern geschätzten Symbole $\underline{s}$.

Für eine zweite bevorzugte Ausführungsform der Erfindung wird die Übertragungskanalmatrix H zwischen den $N_t$ Sendeantennen und den $N_r$ Empfangsantennen über eine $Q \cdot R$-Zerlegung in eine orthogonale Matrix $Q^H$ und eine untere Dreiecksmatrix R zerlegt.

Anschließend werden bevorzugt folgende Verfahrensschritte durchgeführt:

- Berechnen einer Anzahl $M$ von groben Schätzwerten $\tilde{s}_k^{(1)},..,\tilde{s}_k^{(a)},..,\tilde{s}_k^{(M)}$ für das in einem Layer $k$ geschätzte Symbol $s_k$ durch Entzerren der in den Layer $k$ transformierten empfangenen Symbole $r_1,..,r_k,..,r_{Nr}$ von in den Layer $k$ transformierten und in jeweils einem Pfad $a$ im Zustands-Diagramm vorausgehenden und bereits ermittelten exakteren Schätzwerten $\hat{s}_1^{(1)},...,\hat{s}_{k-1}^{(1)},..,\hat{s}_1^{(a)},...,\hat{s}_{k-1}^{(a)},...,\hat{s}_1^{(M)},...,\hat{s}_{k-1}^{(M)},...\hat{s}_{Nt}^{(M)}$ für im Layer 1 bis $k-1$ geschätzte Symbole $s_1,..,s_{k-1}$,
- Ermitteln einer Voronoi-Region $V(\tilde{s}_k^{(1)}),..,V(\tilde{s}_k^{(a)}),..,V(\tilde{s}_k^{(M)})$ im Zustandsdiagramm für jeden im Layer $k$ ermittelten groben Schätzwert $\tilde{s}_k^{(1)},..,\tilde{s}_k^{(a)},..,\tilde{s}_k^{(M)}$, in dessen Zentrum der jeweilige grobe Schätzwert $\tilde{s}_k^{(1)},..,\tilde{s}_k^{(a)},..,\tilde{s}_k^{(M)}$ liegt, mit einer gegenüber der Anzahl $M$ reduzierten Anzahl P von Symbolhypothesen $\overline{\underline{S}}_k^{(1)},...,\overline{\underline{S}}_k^{(a)},...,\overline{\underline{S}}_k^{(M)}$ für das im Layer $k$ geschätzte Symbol $s_k$,
- Ermitteln jeweils einer euklidischen Distanz $\underline{d}_k^{(1)},..,\underline{d}_k^{(a)},..,\underline{d}_k^{(M)}$ zwischen jedem einzelnen groben Schätzwert $\tilde{s}_k^{(1)},..,\tilde{s}_k^{(a)},..,\tilde{s}_k^{(M)}$ des im Layer $k$ geschätzten Symbols $s_k$ und allen in der zugehörigen Voronoi-Region $V(\tilde{s}_k^{(1)}),..,V(\tilde{s}_k^{(a)}),..,V(\tilde{s}_k^{(M)})$ gelegenen Symbolhypothesen $\overline{\underline{S}}_k^{(1)},...,\overline{\underline{S}}_k^{(a)},...,\overline{\underline{S}}_k^{(M)}$ und Ermitteln einer Pfadmetrik $\underline{M}_k^{(1)},..,\underline{M}_k^{(a)},..,\underline{M}_k^{(M)}$ für jede einzelne Symbolhypothese $\overline{\underline{S}}_k^{(1)},...,\overline{\underline{S}}_k^{(a)},...,\overline{\underline{S}}_k^{(M)}$ im Layer $k$ durch Addition der jeweils ermittelten

euklidischen Distanz $\underline{d}_k^{(1)},..,\underline{d}_k^{(a)},..,\underline{d}_k^{(M)}$ und einer Pfadmetrik $\underline{M}_{k-1}^{(1)},..,\underline{M}_{k-1}^{(a)},..,\underline{M}_{k-1}^{(M)}$ aus aufsummierten minimalen euklidischen Distanzen $\underline{d}_1^{(1)},..,\underline{d}_1^{(a)},..,\underline{d}_1^{(M)},..,\underline{d}_{k-1}^{(1)},..,\underline{d}_{k-1}^{(a)},..,\underline{d}_{k-1}^{(M)}$ zwischen im jeweiligen Pfad $a$ vorausgehenden exakteren Schätzwerten $\hat{s}_1^{(a)},..,\hat{s}_{k-1}^{(a)}$ und groben Schätzwerten $\tilde{s}_1^{(a)},..,\tilde{s}_{k-1}^{(a)}$ für im Layer 1 bis $k$-1 geschätzte Symbole $s_1,..,s_{k-1}$,

- Ermitteln von bis zu $M$ exakteren Schätzwerten $\hat{s}_k^{(1)},..,\hat{s}_k^{(a)},..,\hat{s}_k^{(M)}$ für das im Layer $k$ geschätzte Symbole $s_k$ als die zu den jeweils $M$ kleinsten Pfadmetriken $M_{k,p}^{(a)}$ gehörigen Symbolhypothesen $\overline{s_{k,p}}^{(a)}$ aus allen im Layer $k$ berechneten Pfadmetriken $\underline{M}_k^{(1)},..,\underline{M}_k^{(a)},..,\underline{M}_k^{(M)}$ und

- Ermitteln von optimalen Schätzwerten $\underline{s}$ für die in allen Layern geschätzten Symbole $\underline{s}$ als die zum Pfad $a$ mit minimaler Pfadmetrik $M_{N_t,p}^{(a)}$ im Layer $N_t$ gehörigen exakteren Schätzwerte $\hat{\underline{s}}^{(a)}$ der in allen Layern geschätzten Symbole $\underline{s}$.

Zur Bestimmung der in den ersten bis $N_f$-ten Layer transformierten empfangenen Symbole $r_1,..,r_k,..,r_{Nr}$ wird eine $Q \cdot R$-Zerlegung einer Übertragungskanalmatrix $H$ zwischen den Sendeantennen und den Empfangsantennen in eine orthogonale Matrix $Q^H$ und eine Dreiecksmatrix R und eine Gewichtung der empfangenen Symbole $r_1,..,r_k,..,r_{Nr}$ mit der orthogonalen Matrix $Q^H$ durchgeführt.

Zur Bestimmung der in den ersten bis $N_f$-ten Layer transformierten exakteren Schätzwerte $\hat{s}_1^{(1)},..,\hat{s}_{k-1}^{(1)},\hat{s}_1^{(2)},..,\hat{s}_{k-1}^{(2)},...,\hat{s}_1^{(M)},..,\hat{s}_{k-1}^{(M)},..,\hat{s}_{Nt}^{(M)}$ wird eine Gewichtung der exakteren Schätzwerte $\hat{s}_1^{(1)},..,\hat{s}_{k-1}^{(1)},\hat{s}_1^{(2)},..,\hat{s}_{k-1}^{(2)},...,\hat{s}_1^{(M)},..,\hat{s}_{k-1}^{(M)},..,\hat{s}_{Nt}^{(M)}$ mit zum jeweiligen Layer gehörigen Zeilenelementen $R_{v,v}$ der Dreiecksmatrix R durchgeführt.

Die beiden Ausführungsformen des erfindungsgemäßen Verfahrens und der erfindungsgemäßen Vorrichtung ermöglichen einerseits aufgrund der Dreiecksstruktur der Dreiecksmatrix R eine vergleichsweise einfache Ermittlung von groben Schätzwerten $\tilde{s}_1^{(a)},..,\tilde{s}_{Nt}^{(a)}$ in den einzelnen Layern 1 bis $N_t$ für die von den einzelnen Sendeantennen gesendeten Symbole $s_1,..,s_{Nt}$ und andererseits eine gegenüber der Mächtigkeit $M$ des verwendeten Symbolalphabets reduzierte Anzahl P von Zweigmetrikberechnungen zur Ermittlung von exakteren Schätzwerten $\tilde{s}_1^{(a)},..,\tilde{s}_{Nt}^{(a)}$ ausgehend von den einzelnen berechneten groben Schätzwerten $\tilde{s}_1^{(a)},..,\tilde{s}_{k-1}^{(a)}$.

In einer vorteilhaften Weiterentwicklung des erfindungsgemäßen Verfahrens ist die Anzahl $M$ von groben Schätzwerten $\tilde{s}_k^{(1)},..,\tilde{s}_k^{(M)}$ für das im jeweiligen $k$-ten Layer geschätzte Symbol $s_k$ keine feste, der Mächtigkeit $|S|$ des verwendeten Modulationsalphabets S entsprechende Größe, sondern eine vom jeweiligen $k$-ten Layer abhängige Anzahl $M_{k'}$ von groben Schätzwerten $\tilde{s}_k^{(1)},..,\tilde{s}_k^{(Mk')}$, die indirekt proportional zum Diagonalelement $R_{k,k}$ des $k$-ten Layers in der Dreiecksmatrix R ist. Die vom jeweiligen $k$-ten Layer abhängige Anzahl $M_{k'}$ von groben Schätzwerten $\tilde{s}_k^{(1)},..,\tilde{s}_k^{(Mk')}$ berechnet sich nach folgender mathematischer Formel:

$$M_{k'} = N_B \cdot \frac{1/R_{k,k}}{\sum\limits_{i=1}^{N_t} 1/R_{i,i}}$$

Wobei $N_B$ die Gesamtzahl der in allen Layern zu berechnenden euklidischen Distanzen ist.

Auf diese Weise ist es möglich, in Abhängigkeit der Größe des Diagonalelements $R_{k,k}$ des $k$-ten Layers in der Dreiecksmatrix R, die ein Maß für die Höhe des Signalpegels des im Layer $k$ geschätzten Symbols $s_k$ ist, für gesendete Symbole mit hohem Signalpegel und damit einem guten Signal-Rausch-Abstand, einer geringen Symbolstreuung im Zustandsdiagramm und somit einer vergleichsweise einfachen Symbol-Detektierbarkeit eine geringe Anzahl $M_{k'}$ von Schätzwerten und gesendete Symbole mit niedrigem Signalpegel und damit einem schlechten Signal-Rausch-Abstand, einer hohen Symbolstreuung im Zustandsdiagramm und somit einer vergleichsweise schwierigen Symbol-Detektierbarkeit eine hohe Anzahl $M_{k'}$ von Schätzwerten zu ermitteln.

Im Folgenden werden die bevorzugten beispielhaften Ausführungsformen des erfindungsgemäßen Verfahrens und der erfindungsgemäßen Vorrichtung zur Detektion von Sendesignalen in einer Multi-Layer-Übertragung anhand der Zeichnung im Detail erläutert. Die Figuren der Zeichnung zeigen:

Fig. 1    eine Baumstruktur eines QRD-M-Detektors mit $N_t$=3, $N_r$=3, $M$=4 und $|S|$=4,

Fig. 2    eine Baumstruktur eines erfindungsgemäßen QRD-M-P-Detektors mit $N_t$=3, $N_r$=3, $M$=4, P =2 und $|S|$=4,

Fig. 3A    ein Flussdiagramm einer ersten Ausführungsform des erfindungsgemäßen Verfahrens zur Detektion von gesendeten Symbolen in einem Multi-Layer-Übertragungssystem mit reduzierter Zweigmetrik-Berechnung,

Fig. 3B    ein Flussdiagramm einer zweiten Ausführungsform des erfindungsgemäßen Verfahrens zur Detektion von gesendeten Symbolen in einem Multi-Layer-Übertragungssystem mit reduzierter Zweigmetrik-Berechnung,

Fig. 4    ein Blockdiagramm der erfindungsgemäßen Vorrichtung zur Detektion von gesendeten Symbolen in einem Multi-Layer-Übertragungssystem mit reduzierter Zweigmetrik-Berechnung und

Fig. 5    ein Diagramm der Bitfehlerrate in Abhängigkeit des Signal-Rausch-Verhältnisses für verschiedene Detektions-Algorithmen.

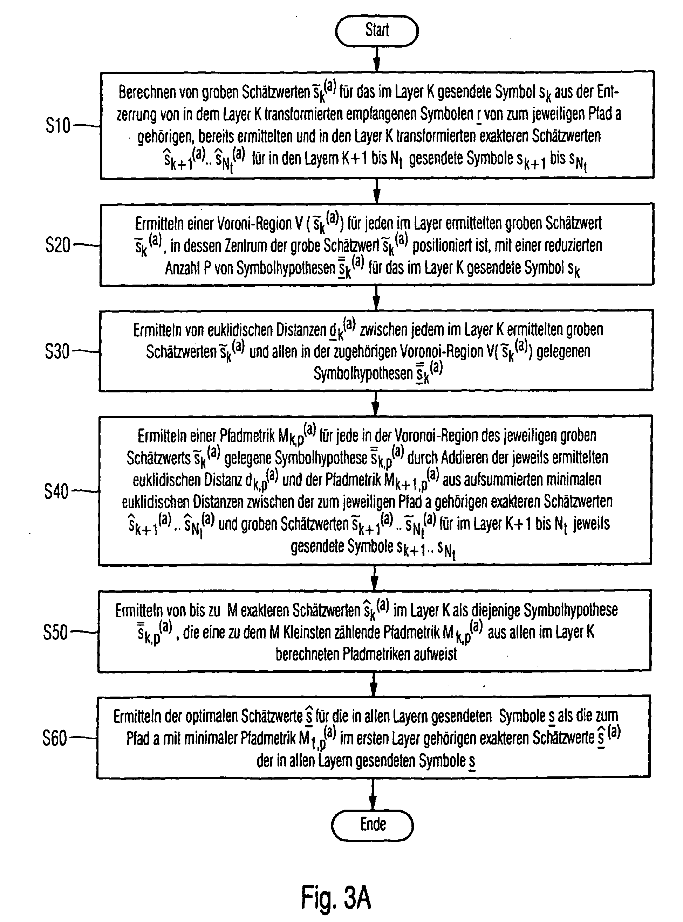

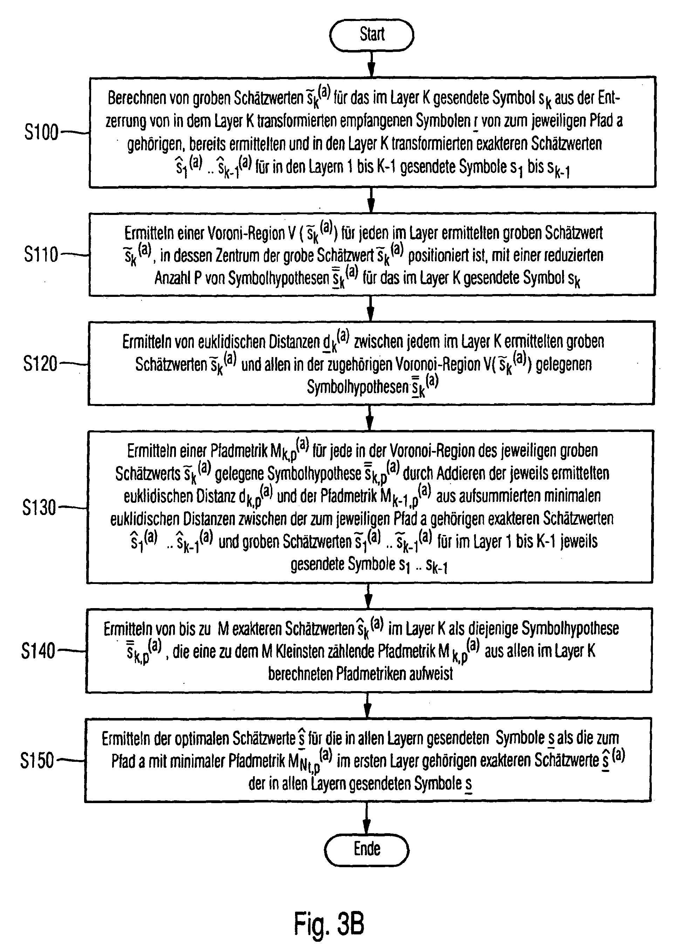

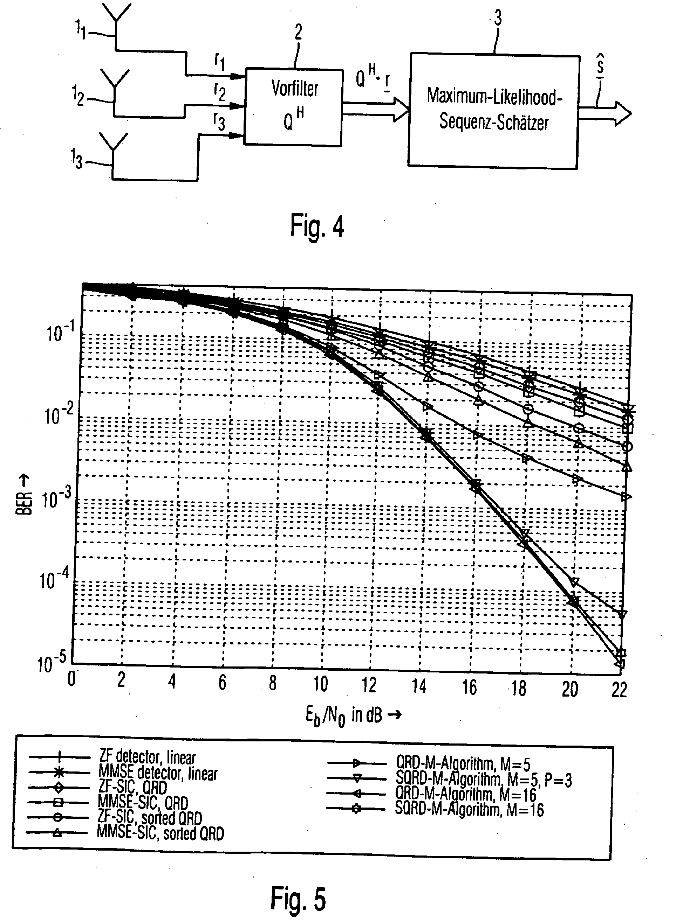

Bevor das erfindungsgemäße Verfahren und die erfindungsgemäße Vorrichtung zur Detektion von Sendesignalen in einer Multi-Layer-Übertragung anhand der Figuren 3A, 3B und 4 beschrieben wird, werden die für das Verständnis der Erfindung erforderlichen Grundlagen im Folgenden hergeleitet:

In Anlehnung an die zeitliche Entzerrung mithilfe des Maximum-Likelihood-Sequence-Estimators (MLSE) ermittelt der räumliche Entzerrer nach dem MLSE-Verfahren gemäß Gleichung (1) die euklidische Distanz zwischen dem Vektor der Empfangssignale $\underline{r}(i)$ zum aktuellen Zeitpunkt $i$ und dem mit der Übertragungsmatrix H gewichteten Vektor aller möglichen Hypothesen $\underline{\overline{\overline{s}}}$ der Sendesignale $\underline{s}$.

$$\underline{\overline{s}} = \arg\left\{\min_{\underline{s} \in S} \|\underline{r}(i) - H \cdot \underline{\overline{\overline{s}}}\|^2\right\} \qquad (1)$$

Ein für die Praxis geeignetes räumliches Entzerrungsverfahren basiert gemäß Gleichung (2) auf der $Q \cdot R$-Zerlegung der Übertragungsmatrix H, bei der der durch die Spaltenvektoren $\underline{h}_i$ der $N_r \cdot N_t$-dimensionalen Übertragungsmatrix H festgelegte $N_r$-dimensionale Vektorraum in einen korrespondierenden, durch die zueinander orthogonalen und normierten - orthonormierten - Vektoren $\underline{q}_i$ einer orthonormierten und unitären $N_r \cdot N_t$-dimensionalen Matrix Q festgelegten orthonormierten Vektorraum und die durch die Spaltenvektoren $\underline{r}_i$ einer $N_r \cdot N_t$-dimensionalen Dreiecksmatrix R festgelegten Projektionen der Spaltenvektoren $\underline{h}_i$ der Übertragungsmatrix H auf den orthonormierten Vektorraum zerlegt wird.

$$H = \begin{bmatrix} \underline{h}_1 & .. & \underline{h}_i & .. & \underline{h}_{N_t} \end{bmatrix} = Q \cdot R =$$

$$= \begin{bmatrix} \underline{q}_1 & .. & \underline{q}_i & .. & \underline{q}_{N_t} \end{bmatrix} \cdot \begin{bmatrix} \underline{r}_1 & .. & \underline{r}_i & .. & \underline{r}_{N_t} \end{bmatrix} \qquad (2)$$

Die Dreiecksmatrix R gemäß Gleichung (3A) stellt eine obere Dreiecksmatrix $R^o$, die Dreiecksmatrix R gemäß Gleichung (3B) stellt eine untere Dreiecksmatrix $R^u$ dar.

$$R^o = \begin{bmatrix} \underline{r}_1 & .. & \underline{r}_i & .. & \underline{r}_{N_t} \end{bmatrix} = \begin{bmatrix} R_{1,1} & R_{1,2} & .. & R_{1,N_t} \\ 0 & R_{2,2} & .. & R_{2,N_t} \\ \vdots & \vdots & \vdots & R_{N_t-1,N_t} \\ 0 & 0 & 0 & R_{N_t,N_t} \end{bmatrix} \qquad (3A)$$

$$R^u = \begin{bmatrix} \underline{r}_1 & .. & \underline{r}_i & .. & \underline{r}_{N_t} \end{bmatrix} = \begin{bmatrix} R_{1,1} & 0 & .. & 0 \\ R_{2,1} & R_{2,2} & .. & 0 \\ \vdots & \vdots & \vdots & 0 \\ R_{N_t,1} & R_{N_t,2} & .. & R_{N_t,N_t} \end{bmatrix} \qquad (3B)$$

Bei den folgenden Betrachtungen wird von einem Systemmodell des Mehrantennen-Übertragungssystems gemäß Gleichung (4) ausgegangen, das ein Multiple-Input-Multiple-Ouput-(MIMO-)System mit $N_t$ Sendeantennen und $N_r$ Empfangsantennen darstellt, in dem ein $N_t$-dimensionaler Sendesignalvektor $\underline{s}$, dessen mittlere Signalleistung $E\{\underline{s} \cdot \underline{s}^H\}$ gemäß Gleichung (5) auf den maximalen Wert normiert ist, mit einer $N_r \cdot N_t$-dimensionalen Übertragungsmatrix H gewichtet, die sich gemäß Gleichung (6) aus unkorrelierten, komplex Gauss-verteilten Übertragungsfaktoren $H_{i,j}$ mit Varianz eins zusammensetzt, und mit einem $N_r$-dimensionalen Rauschvektor $\underline{n}$ addiert, der gemäß Gleichung (7) ein komplexes, Gauss'sches additives Rauschen mit Varianz $\sigma_n^2$ beinhaltet, so dass sich ein $N_r$-dimensionaler Empfangsvektor $\underline{r}$ ergibt.

$$\underline{r} = H \cdot \underline{s} + \underline{n} \qquad (4)$$

$$E\left\{\underline{s} \cdot \underline{s}^H\right\} = \frac{1}{N_t} \cdot I_{N_t} \qquad (5)$$

$$E\left\{H \cdot H^H\right\} = I_{N_r} \qquad (6)$$

$$E\left\{\underline{n} \cdot \underline{n}^H\right\} = \sigma_n^2 \cdot I_{N_t} \qquad (7)$$

Wird das Systemmodell des Mehrantennen-Übertragungssystems gemäß Gleichung (4) beidseitig mit der hermitschen orthonormierten Matrix $Q^H$ multipliziert, so ergibt sich ein Gleichungssystem (8), das in einem Maximum-Likelihood-Ansatz unter Minimierung des Rauschvektors $\underline{n}$ in eine Metrik $M(\underline{\overline{\overline{s}}})$ entsprechend Gleichung (1) eingefügt werden kann, deren Minimierung gemäß Gleichung (9) zu Schätzwerten $s$ für den Sendesignalvektor $\underline{s}$ führt.

$$\underline{y} = Q^H \cdot \underline{r} = R \cdot \underline{s} + Q^H \cdot \underline{n} \qquad (8)$$

$$\underline{\tilde{s}} = \arg\left\{\min_{\underline{s} \in S^{N_t}} M(\underline{\overline{\overline{s}}})\right\} = \arg\left\{\min_{\underline{s} \in S^{N_t}} \|\underline{y} - R \cdot \underline{\overline{\overline{s}}}\|^2\right\} \qquad (9)$$

Die Minimierung der Metrik $M(\underline{\overline{\overline{s}}})$ nach dem Maximum-Likelihood-Ansatz gemäß Gleichung (9) erfolgt erfindungsgemäß in drei Schritten:

• sukzessives Berechnen von mehreren groben Schätzwerten $\tilde{s}_k^{(\alpha)}$ für jeden Layer $k$ durch sukzessives Lösen des Gleichungssystems der Metrik $M(\underline{\overline{\overline{s}}})$ in Gleichung (9),

• sukzessives Ermitteln eines exakteren Schätzwerts $\hat{s}_k^{(\alpha)}$ durch Minimierung der euklidischen Distanz zwischen dem

zugehörigen groben Schätzwerts $\tilde{s}_k^{(\alpha)}$ und einer gegenüber der Mächtigkeit $|S|$ des Symbolalphabets reduzierten Anzahl P von Symbolhypothesen $\underline{\overline{s}}_k^{(\alpha)}$, die im Zustandsdiagramm benachbart zum groben Schätzwerts $\tilde{s}_k^{(\alpha)}$ positioniert sind und

- Detektion derjenigen exakteren Schätzwerte $\hat{s}_k^{(\alpha)}$ aus einer Anzahl von bis zu $M$ exakteren Schätzwerten $\hat{s}_k^{(\alpha)}$ als optimale Schätzwerte $\hat{s}_k$ der in den einzelnen Layern $k$ geschätzten Symbole $s_k$ der jeweiligen $k$-ten Sendeantenne, die zum Pfad mit minimaler Pfadmetrik $\underline{M}^{(a)}$ gehörigen.

Zur Berechnung von groben Schätzwerten $\tilde{s}_k^{(\alpha)}$ für das im jeweiligen Layer $k$ gesendete Symbol $s_k$ können im Fall einer oberen Dreiecksmatrix $R^o$ gemäß Gleichung (3A) die einzelnen Zeilen der Metrik sukzessive vom Layer $N_t$ bis 1 ohne Durchführung einer numerisch komplexen Inversion der Dreiecksmatrix R zur Bestimmung von groben Schätzwerten $\underline{\tilde{s}}$ für die gesendeten Symbole des Sendesymbolvektors $\underline{s}$ herangezogen werden. Ausgehend von der $k$-ten Zeile der Metrik $\| \underline{y} - R \cdot \underline{\overline{s}} \|^2$ aus Gleichung (9) ergibt sich der grobe Schätzwert $\tilde{s}_k^{(\alpha)}$ mit $\alpha=1,...,M$ für das von der $k$-ten Sendeantenne abgestrahlte Sendesignal $s_k$ gemäß Gleichung (10A).

Hierbei wird ausgehend von einem der insgesamt $M$ im nächst höheren Layer $k+1$ bereits ermittelten exakteren Schätzwerten $\hat{s}_{k+1}^{(\alpha)}$ mit $\alpha=1,...,M$ und dessen Pfadhistorie $\begin{bmatrix} \hat{s}_{k+2}^{(\alpha)} & .. & \hat{s}_{N_t}^{(\alpha)} \end{bmatrix}$ eine Entzerrung der empfangenen Symbole $\underline{r}=[r_1 .. r_k .. r_{Nr}]$, die mittels Gewichtung mit der orthogonalen Matrix $Q^H$ in den Layer $k$ transformiert werden, von in den höheren Layern $k+1$ bis $N_t$ bereits ermittelten exakteren Schätzwerten $\hat{s}_{k+1}^{(\alpha)},...,\hat{s}_{Nt}^{(\alpha)}$ mit $\alpha=1,...,M$, die mittels Gewichtung mit den Matrixelementen $R^o_{k,k+1},..,R^o_{k,Nt}$ der oberen Dreiecksmatrix $R^o$ in den Layer $k$ transformiert werden, durchgeführt.

$$\tilde{s}_k^{(a)} = \frac{1}{R^o_{k,k}} \cdot \left( y_k - \sum_{v=k+1}^{N_t} R^o_{k,v} \cdot \hat{s}_v^{(\alpha)} \right) \qquad (10A)$$

Im Fall einer unteren Dreiecksmatrix $R^u$ gemäß Gleichung (3B) können die einzelnen Zeilen der Metrik analog zum Fall der oberen Dreiecksmatrix sukzessive vom Layer 1 bis $N_t$ zur Bestimmung von groben Schätzwerten $\underline{\tilde{s}}$ für die gesendeten Symbole des Sendesymbolvektors $\underline{s}$ herangezogen werden, indem gemäß Gleichung (10B) ausgehend von einem der insgesamt $M$ im nächst niedrigeren Layer $k$-1 bereits ermittelten exakteren Schätzwerten $\hat{s}_{k-1}^{(\alpha)}$ mit $\alpha=1,...,M$ und dessen Pfadhistorie $[\hat{s}_1^{(\alpha)} .. \hat{s}_{k-1}^{(\alpha)}]$ .. eine Entzerrung der empfangenen Symbole $\underline{r}=[r_1 .. r_k .. r_{Nr}]$, die mittels Gewichtung mit der orthogonalen Matrix $Q^H$ in den $k$-ten Layer transformiert werden, von in den niedrigeren Layern 1 bis $k$-1 bereits ermittelten exakteren Schätzwerten $\hat{s}_1^{(\alpha)},...,\hat{s}_{k-1}^{(\alpha)}$ mit $\alpha=1,...,M$, die mittels Gewichtung mit den Matrixelementen $R^u_{k,1},..,R^u_{k,k-1}$ der oberen Dreiecksmatrix $R^u$ in den $k$-ten Layer transformiert werden, durchgeführt wird.

$$\tilde{s}_k^{(a)} = \frac{1}{R^u_{k,k}} \cdot \left( y_k - \sum_{v=1}^{k-1} R^u_{k,v} \cdot \hat{s}_v^{(\alpha)} \right) \qquad (10B)$$

Ausgehend von den bis zu $M$ im jeweiligen Layer $k$ berechneten groben Schätzwerten $\tilde{s}_k^{(\alpha)}$ für das von der $k$-ten Sendeantenne abgestrahlte Sendesignal $s_k$ wird ein exakterer Schätzwert $\hat{s}_k^{(\alpha)}$ detektiert, indem für jeden groben Schätzwert $\tilde{s}_k^{(\alpha)}$ eine Voronoi-Region $V(\tilde{s}_k^{(\alpha)})$ im Zustandsdiagramm mit dem groben Schätzwer $\tilde{s}_k^{(\alpha)}$ als Zentrum der Voronoi-Region $V(\tilde{s}_k^{(\alpha)})$ gebildet wird, die eine gegenüber der Mächtigkeit $|S|$ des verwendeten Symbolalphabets reduzierte Anzahl P von Symbolhypothesen $\underline{\overline{s}}_k^{(a)}$ aufweist.

Eine Voronoi-Region $V(\underline{p}_i)$ mit ihrem Zentrum $\underline{p}_i$ stellt gemäß Gleichung (11) eine Ansammlung von Punkten $\underline{x}$

dar, die zum Zentrum $\underline{p}_i$ ihrer Voronoi-Region $V(\underline{p}_i)$ eine geringere Distanz $|\underline{p}_i\text{-}\underline{x}|$ als zu einem Zentren $\underline{p}_j$ einer anderen Voronoi-Region $V(\underline{p}_j)$, insbesondere einer benachbarten Voronoi-Region $V(\underline{p}_j)$, aufweist.

$$V(\underline{p}_i) = \left\{ \underline{x} : \left| \underline{p}_i - \underline{x} \right| \leq \left| \underline{p}_j - \underline{x} \right| \forall i \neq j \right\} \tag{11}$$

Die Ermittlung einer Voronoi-Region $V(\tilde{s}_k^{(\alpha)})$ im Zustandsdiagramm mit dem groben Schätzwert $\tilde{s}_k^{(\alpha)}$ als Zentrum der Voronoi-Region $V(\tilde{s}_k^{(\alpha)})$ und insgesamt P Symbolhypothesen $\overline{\overline{\underline{S}}}_k^{(a)}$ innerhalb der Voronoi-Region $V(\tilde{s}_k^{(\alpha)})$ liefert folglich diejenigen P Symbolhypothesen aus allen $M$ möglichen Symbolhypothesen $\overline{\overline{S}}_{k,p}^{(a)}$, die die kleinste euklidische Distanz $d_{k,p}^{(a)}$ zum groben Schätzwert $\tilde{s}_k^{(\alpha)}$ aufweisen.

Im nächsten Schritt werden für jeden der bis zu $M$ im jeweiligen Layer $k$ berechneten groben Schätzwerte $\tilde{s}_k^{(\alpha)}$ die jeweiligen euklidischen Distanzen $\underline{d}_k^{(a)}=[d_{k,1}^{(a)},..,d_{k,p}^{(a)},..,d_{k,p}^{(a)}]$ zu jeder einzelnen Symbolhypothese $\overline{\overline{S}}_{k,p}^{(a)}$ mit $p=1,..,P$ der insgesamt P zählenden, in der Voronoi-Region $V(\tilde{s}_k^{(\alpha)})$ des jeweiligen groben Schätzwerts $\tilde{s}_k^{(\alpha)}$ gelegenen Symbolhypothesen $\overline{\overline{\underline{S}}}_k^{(a)} = \left[ \overline{\overline{S}}_{k,1}^{(a)},..,\overline{\overline{S}}_{k,p}^{(a)},..,\overline{\overline{S}}_{k,P}^{(a)} \right]$ bestimmt. Diese einzelnen euklidischen Distanzen $\underline{d}_k^{(a)}=[d_{k,1}^{(a)},..,d_{k,p}^{(a)},..,d_{k,p}^{(a)}]$, die Zweigmetriken darstellen, werden zu der Pfadmetrik $M_{k+1}^{(a)}$ der zum jeweiligen groben Schätzwert $\tilde{s}_k^{(\alpha)}$ im Layer $k$ gehörigen Pfadhistorie aus bereits ermittelten exakteren Schätzwerten $\hat{s}_{k+1}^{(a)},..,\hat{s}_{Nt}^{(a)}$ in den höheren Layern $k+1$ bis $N_t$ im Fall einer $Q \cdot R$-Zerlegung in eine obere Dreiecksmatrix $R^o$ oder zu der Pfadmetrik $M_{k-1}^{(a)}$ der zum jeweiligen groben Schätzwert $\tilde{s}_k^{(\alpha)}$ im Layer k gehörigen Pfadhistorie aus bereits ermittelten exakteren Schätzwerten $\hat{s}_1^{(a)},..,\hat{s}_{k-1}^{(a)}$ in den niedrigeren Layern 1 bis $k-1$ im Fall einer $Q \cdot R$-Zerlegung in eine untere Dreiecksmatrix $R^u$ hinzuaddiert und ergeben eine zur jeweiligen Symbolhypothese $\overline{\overline{S}}_{k,p}^{(a)}$ gehörige Pfadmetrik $M_{k,p}^{(a)}$.

Aus allen Pfadmetriken $\underline{M}_k^{(a)'}=[M_{k,1}^{(a)},..,M_{k,p}^{(a)},..,M_{k,P}^{(a)}]$ mit $a=1,..,M$, die auf diese Weise im jeweiligen Layer $k$ für alle bis zu $M$ zählenden groben Schätzwerte $\tilde{s}_k^{(a)}$ und deren zugehörigen, insgesamt P zählenden Symbolhypothesen $\overline{\overline{\underline{S}}}_k^{(a)} = \left[ \overline{\overline{S}}_{k,1}^{(a)},..,\overline{\overline{S}}_{k,p}^{(a)},..,\overline{\overline{S}}_{k,P}^{(a)} \right]$ ermittelt wurden, werden gemäß

Gleichung (12) die M kleinsten Pfadmetriken $M_{k,p}^{(a)}$ mit $a=1,..,M$ und $p=1,..,P$ und zu einem zum Layer $k$ gehörigen Pfadmetrikvektor $\underline{M}_k=[M_k^{(1)},..,M_k^{(a)},..,M_k^{(M)}]$ zusammengefasst.

Die zu den $M$ kleinsten Pfadmetriken $M_{k,p}^{(a)}$ gehörigen Symbolhypothesen $\overline{\overline{S}}_{k,p}^{(a)}$ werden gemäß Gleichung (13) als die im Layer $k$ ermittelten, insgesamt bis zu $M$ zählenden exakteren Schätzwerte $\underline{s}_k=[\hat{s}_k^{(1)},...,\hat{s}_k^{(M)}]$ identifiziert.

$$\underline{M}_k = \left[ M_k^{(1)},..,M_k^{(a)},..,M_k^{(M)} \right] = \min\left\{ M_{k,p}^{(a)}; \forall p=1,..,P \wedge a=1,..,M \right\} \tag{12}$$

$$\underline{\hat{s}}_k = \left[ \hat{s}_k^{(1)},...,\hat{s}_k^{(M)} \right] = \arg\left\{ \min\left\{ M_{k,p}^{(a)}(\overline{\overline{s}}); \forall p=1,..,P \wedge a=1,..,M \right\} \right\} \tag{13}$$

Im letzten Schritt werden, sobald für alle Layer 1 bis $N_t$ die zugehörigen bis zu $M$ zählenden exakteren Schätzwerte $\hat{\underline{s}}_k = [\hat{s}_k^{(1)},..,s_k^{(M)}]$ mit $k=1,..,N_t$ identifiziert wurden und die zum zuletzt betrachteten Layer gehörigen Pfadmetriken - $\underline{M}_{Nt} = [M_{Nt}^{(1)},..,M_{Nt}^{(a)},..,M_{Nt}^{(M)}]$ bei Verwendung einer oberen Dreiecksmatrix $R^o$ und $\underline{M}_1 = [M_1^{(1)},..,M_1^{(a)},..,M_1^{(M)}]$ bei Verwendung einer unteren Dreiecksmatrix $R^u$ - ermittelt wurden, aus allen ermittelten Pfadmetriken die kleinste Pfadmetrik $M_{min}$ gemäß Gleichung (14A) bzw. (14B) und der zur kleinsten Pfadmetrik gehörige Pfad mit den optimalen Schätzwerten $\hat{\underline{s}} = [\hat{s}_1,...,\hat{s}_{Nt}]$ für die in den einzelnen Layern und damit von den einzelnen Sendeantennen $k=1,..,N_t$ zu einem bestimmten Zeitpunkt gesendeten Symbole $\underline{s} = [s_1,...,s_k,...,s_{Nt}]$ gemäß Gleichung (15A) bzw. (15B) ermittelt.

$$M_{\min} = \min\left\{ M_1^{(1)},..,M_1^{(a)},..,M_k^{(M)} \right\} \qquad (14A)$$

$$M_{\min} = \min\left\{ M_{N_t}^{(1)},..,M_{N_t}^{(a)},..,M_{N_t}^{(M)} \right\} \qquad (14B)$$

$$\hat{\underline{s}} = \left[ \hat{s}_1,...,\hat{s}_{N_t} \right] = \arg\left\{ \min\left\{ M_1^{(a)}(\hat{\underline{s}}^{(a)}); a = 1,..,M \right\} \right\} \qquad (15A)$$

$$\hat{\underline{s}} = \left[ \hat{s}_1,...,\hat{s}_{N_t} \right] = \arg\left\{ \min\left\{ M_{N_t}^{(a)}(\hat{\underline{s}}^{(a)}); a = 1,..,M \right\} \right\} \qquad (15B)$$

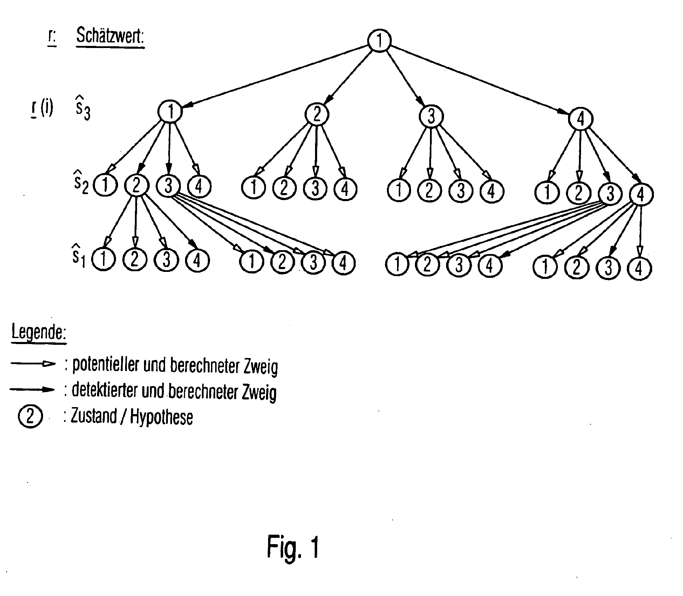

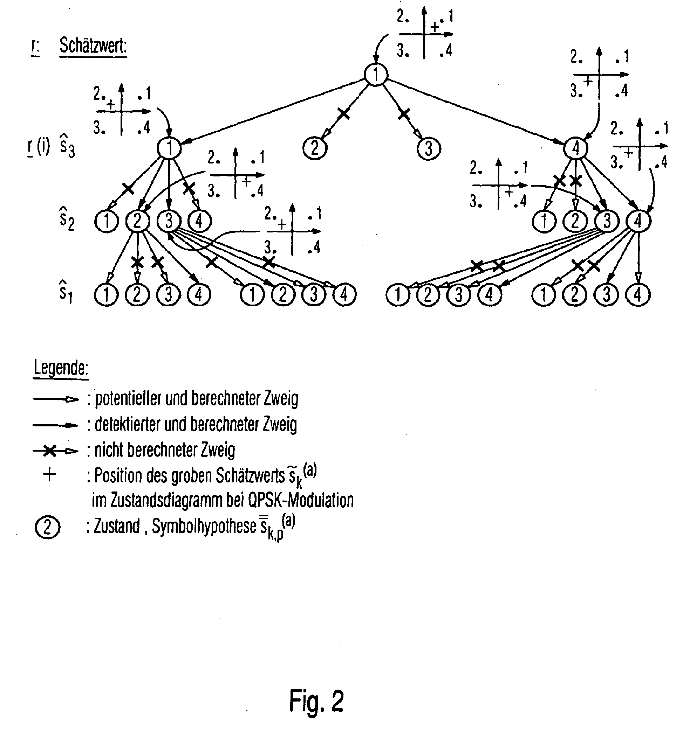

Während bei einem Viterbi-Algorithmus insgesamt $|S|^{Nt} = M^{Nt}$ Pfad- und/oder Zweigmetriken und bei einem konventionellen, QRD-M-Algorithmus, der eine $Q \cdot R$-Zerlegung und einen M-Algorithmus kombiniert, im zuerst betrachteten Layer insgesamt $|S|=M$ Pfad- und/oder Zweigmetriken und in allen weiteren $N_t$-1 Layern jeweils $M.|S|=M \cdot M$ und somit insgesamt $(N_t-1) \cdot M \cdot M + M$ Pfad- und/oder Zweigmetriken gemäß Fig. 1 berechnet werden, reduziert sich die Anzahl $N_B$ der insgesamt zu berechnenden Pfad- und/oder Zweigmetriken beim erfindungsgemäßen Verfahren gemäß Gleichung (16) und Fig. 2 auf:

$$N_B = (N_t - 1) \cdot M \cdot P + P \le (N_t - 1) \cdot M \cdot M + M \qquad (16)$$

Werden von den einzelnen Sendeantennen Sendesignale mit deutlich unterschiedlichen Signalpegeln gesendet, so sind die bei vergleichsweise ähnlichem Rauschpegel in allen Übertragungskanälen der Signalrausch-Abstand zwischen den von den einzelnen Sendeantennen abgestrahlten Signalen deutlich unterschiedlich. Die Schätzung der gesendeten Symbole $\underline{s} = [s_1,..,s_k,..,s_{Nt}]$ in den einzelnen Layern ist folglich unterschiedlich schwierig. Während das zum gesendeten Symbol $s_k$ mit hohem Signalpegel korrespondierende und von allen übrigen gesendeten Symbolen $s_{i \ne k}$ entzerrte empfangene Symbol eine vergleichsweise kleine Streuung um den optimalen Schätzwert $\hat{s}_k$ aufweist und somit nur ein Metrikvergleich mit einer geringen Anzahl von Schätzwerten zur korrekten Detektion erforderlich ist, ist die Streuung eines zum gesendeten Symbol $s_k$ mit niedrigem Signalpegel korrespondierenden und von allen übrigen gesendeten Symbolen $s_{i \ne k}$ entzerrten empfangenen Symbol um den optimalen Schätzwert $\hat{S}_k$ vergleichsweise hoch und somit ein Metrikvergleich mit einer hohen Anzahl von Schätzwerten zur korrekten Detektion erforderlich.

Als Maß für die Höhe des Signalpegels des im Layer $k$ zu schätzenden Sendesymbols wird gemäß Gleichung (8) das Diagonalelement $R_{k,k}$ der Dreiecksmatrix R herangezogen, das den signaltheoretischen Zusammenhang zwischen dem im Layer $k$ geschätzten und von der $k$-ten Sendeantenne gesendeten Symbols $s_k$ und der in den Layer $k$ transformierten einzelnen empfangenen Symbole $\underline{r} = [r_1 .. r_k .. r_{Nt}]$ Größe $y_k$ - darstellt.

Die Anzahl $M_{k'}$ der Metrikvergleiche im $k$-ten Layer ergibt sich somit gemäß Gleichung (17):

$$M_{k'} = N_B \cdot \frac{1/R_{k,k}}{\sum_{i=1}^{N_t} 1/R_{i,i}} \qquad (17)$$

Da die Berechnung der Anzahl $M_{k'}$ der Metrikvergleiche gemäß Gleichung (17) nicht notwendigerweise zu einem ganzzahligen Wert führen kann, ist mithilfe des Least-Squares-Ansatzes ein Vektor $\underline{M}=[M_1..,M_{Nt}]^T$ mit ganzzahligen Werten für die gemäß Gleichung (16) zu berechnende Anzahl $M_{k'}$ der Metrikvergleiche in jedem Layer $k=1,..,N_t$ zu ermitteln. Hierzu wird ein Vektor

$$\overline{\underline{R}} = \frac{N_B}{\sum\limits_{i=1}^{N_t} \frac{1}{R_{i,i}}} \cdot \left[ \frac{1}{R_{1,1}}, \frac{1}{R_{2,2}}, \cdots, \frac{1}{R_{N_t,N_t}} \right]^T$$

mit Elementen, die jeweils die Berechnungsformel für die Anzahl von Metrikvergleichen in jedem Layer in Anlehnung an Gleichung (17) beinhalten, eingeführt. Der gesuchte Vektor $\underline{M}$ mit ganzzahligen Werten für die zu berechnende Anzahl $M_k$ von Metrikvergleichen in jedem Layer $k$ ergibt sich gemäß Gleichung (18) als Lösung der minimierten Fehlerquadrate - Least-Squares-Ansatz - zwischen dem gesuchten Vektor $\underline{M}$ und dem vorgegebenen Vektor $\underline{R}$.

$$\underline{M}_{LS} = \arg\left\{ \min_{M \in Z^{N_t}} \| \underline{M} - \overline{\underline{R}} \|^2 \right\}$$

$$= \arg\left\{ \min_{M \in Z^{N_t}} \left\{ \sum_{k=1}^{N_t} (M_k - N_B \cdot \frac{1/R_{k,k}}{\sum\limits_{i=1}^{N_t} 1/R_{i,i}})^2 \right\} \right\} \qquad (18)$$

Für jedes Element $(M_k)_{LS}$ des gesuchten Vektors $\underline{M}_{LS}$ wird auf diese Weise der nächstgelegene ganzzahlige Wert ermittelt.

Um zu vermeiden, dass ein Abrunden auf Null und damit ein Wegfall eines Überlebenspfades im Baum- oder Trellis-Diagramm auftritt oder die Summe der mit dem Least-Squares-Ansatz ermittelten Elemente $(M_k)_{LS}$ des gesuchten Vektors $\underline{M}_{LS}$ $-$ $\sum\limits_{k=1}^{N_t} (M_k)_{LS}$ $-$ die vorgegebene Anzahl $N_B$ der insgesamt zu berechnenden Pfadmetriken übersteigt, wird Gleichung (18) in Gleichung (19) übergeführt, in der $N_t$-1 von $N_B$ subtrahiert wird, um im schlechtesten Fall insgesamt nur einmal abzurunden und $N_t$-1-mal aufzurunden.

$$\underline{M}_{LS} = \arg\left\{ \min_{M \in Z^{N_t}} \left\{ \sum_{k=1}^{N_t} (M_k - (N_B - (N_t - 1)) \cdot \frac{1/R_{k,k}}{\sum\limits_{i=1}^{N_t} 1/R_{i,i}})^2 \right\} \right\} \qquad (19)$$

Die Partitionierung der Anzahl $N_B$ von zu berechnenden Pfadmetriken auf die einzelnen Layer $k$ mittels Gewichtung der einzelnen Layer $k$ durch ihr zugehöriges invertiertes Diagonalelement $R_{k,k}$ aus der Dreiecksmatrix R gemäß Gleichung (17) bis (19) stellt ein bevorzugtes Ausführungsbeispiel dar. Von der Erfindung ist aber auch jede andere Partitionierung der Anzahl $N_B$ von zu berechnenden Pfadmetriken auf die einzelnen Layer $k$ abgedeckt, die den einzelnen Layern $k$ gemäß ihres Signal-Rausch-Abstands so partitioniert, dass schwachen Layern mehr Schätzwerte und damit Überlebenspfade als starken Layern zugewiesen werden.

Die gemäß Gleichung (18) bzw. (19) für jeden Layer $k$ zu berechnende Anzahl $M_k$ von Pfadmetriken verteilt sich bei den für die jeweils letzten $N_t$-1 Layer zu ermittelnden Pfadmetriken in Anlehnung an Gleichung (16) bei jeweils P für jeden der insgesamt M je Layer $k$ zu bestimmenden groben Schätzwerten $\tilde{s}_k^{(\alpha)}$ für die im $k$-ten Layer gesendeten

Symbole $s_k$ auf $M \cdot P$ zu berechnende Zweig- bzw. Pfadmetriken.

Hierzu ergeben sich mehrere Ausführungsvarianten für die Aufteilung der je Layer $k$ zu berechnende Anzahl $M_k$ von Zweig- und/oder Pfadmetriken auf eine bestimmte Anzahl $M_{k''}$ von je Layer $k$ zu bestimmenden groben Schätzwerten $\tilde{s}_k^{(a)}$ und eine bestimmte Anzahl $\underline{P}_{k''}=[P_k^{(1)},...,P_k^{(Mk'')}]$ von zu berechnenden Zweig- und/oder Pfadmetriken ausgehend von jeden der insgesamt $M_{k''}$ im Layer $k$ ausgewählten groben Schätzwerten $\tilde{s}_k^{(\alpha)}$.

In einer ersten Ausführungsvariante wird ausgehend von dem im vorherigen Layer ermittelten exakteren Schätzwert $\hat{s}_{k\pm1}^{(a)}$ - Index $k+1$ bei Verwendung einer oberen Dreiecksmatrix $R^o$ und Index $k-1$ bei Verwendung einer unteren Dreiecksmatrix $R^u$ - mit kleinster Pfadmetrik $M_{k\pm1}^{(a)}$ unter allen im jeweiligen Layer $k\pm1$ weiterverfolgten Pfadmetriken $\underline{M}_{k\pm1}=[M_{k\pm1}^{(1)},..,M_{k\pm1}^{(Mk\pm1)}]$ die Pfadmetrik $M_{k,p}^{(a)}$ zu derjenigen Symbolhypothese $\overline{\overline{S}}_{k,p}^{(a)}$ aus allen Symbolhypothesen $\overline{\overline{\underline{S}}}_k^{(a)} = \left[ \overline{\overline{S}}_{k,1}^{(a)} ,.., \overline{\overline{S}}_{k,p}^{(a)} ,.., \overline{\overline{S}}_{k,P}^{(a)} \right]$ im Layer $k$ berechnet, die dem im

Layer $k\pm1$ ermittelten exakteren Schätzwert $\hat{s}_{k\pm1}^{(a)}$ nachfolgt und gleichzeitig am nächsten zu den in den Layer $k$ transformierten empfangenen Symbolen $\underline{r}=[r_1 .. r_k .. r_{Nr}]$ positioniert ist.

Anschließend wird sukzessive zu weiteren exakteren Schätzwerten $\hat{s}_{k\pm1}^{(a)}$ im vorherig bearbeiteten Layer $k\pm1$, die die jeweils nächst größere Pfadmetrik $M_{k\pm1}^{(a)}$ aufweisen, weitergeschritten und in äquivalenter Weise die Pfadmetrik $M_{k,p}^{(a)}$ zu derjenigen Symbolhypothese $\overline{\overline{S}}_{k,p}^{(a)}$ aus allen Symbolhypothesen

$\overline{\overline{\underline{S}}}_k^{(a)} = \left[ \overline{\overline{S}}_{k,1}^{(a)} ,.., \overline{\overline{S}}_{k,p}^{(a)} ,.., \overline{\overline{S}}_{k,P}^{(a)} \right]$ berechnet, die dem im Layer $k\pm1$ soeben selektierten exakteren Schätzwert

$\hat{s}_{k\pm1}^{(a)}$ nachfolgt und gleichzeitig am nächsten zu den in den Layer $k$ transformierten empfangenen Symbolen .. $\underline{r}=[r_1 .. r_k .. r_{Nr}]$ positioniert ist.

Sind ausgehend von allen im vorherigen Layer $k\pm1$ ermittelten exakteren Schätzwerten $\hat{s}_{k\pm1}^{(a)}$ jeweils eine Symbolhypothese $\overline{\overline{S}}_{k,p}^{(a)}$ im Layer $k$ ausgewählt worden und deren Pfadmetrik $M_{k,p}^{(a)}$ berechnet worden, so wird beginnend beim im ersten Ermittlungsdurchgang zuerst selektierten exakteren Schätzwert $\hat{s}_{k\pm1}^{(a)}$ des Layers $k\pm1$ wiederum jeweils diejenige Symbolhypothese $\overline{\overline{S}}_{k,p}^{(a)}$ aus allen übrig verbleibenden Symbolhypothesen $\overline{\overline{\underline{S}}}_k^{(a)} = \left[ \overline{\overline{S}}_{k,1}^{(a)} ,.., \overline{\overline{S}}_{k,p}^{(a)} ,.., \overline{\overline{S}}_{k,P}^{(a)} \right]$ im Layer $k$ ausgewählt und deren Pfadmetrik $M_{k,p}^{(a)}$ berechnet, die am zweitnächsten zu den in den Layer $k$ transformierten empfangenen Symbolen $\underline{r}=[r_1 .. r_k .. r_{Nr}]$ positioniert ist.

Dieser Vorgang wird solange mit allen übrigen im Layer $k\pm1$ ermittelten exakteren Schätzwerten $\hat{s}_{k\pm1}^{(a)}$ und

allen übrigen Symbolhypothesen $\overline{\overline{S}}_{k,p}^{(a)}$ zur Bestimmung eines dem im Layer $k\pm1$ ermittelten exakteren Schätzwerten

$\hat{s}_{k\pm1}^{(a)}$ im Layer $k$ nachfolgenden und zu ermittelnden exakteren Schätzwert $\hat{s}_k^{(a)}$ fortgesetzt, bis insgesamt eine für den Layer $k$ zu berechnende Anzahl $M_k$ von Zweig- und/oder Pfadmetrik-Vergleichen im Layer $k$ ermittelt worden ist.

In einer zweiten Ausführungsvariante wird wiederum ausgehend von dem im vorherigen Layer $k\pm1$ ermittelten exakteren Schätzwert $\hat{s}_{k\pm1}^{(a)}$ mit kleinster Pfadmetrik $M_{k\pm1}^{(a)}$ die Pfadmetrik $M_{k,p}^{(a)}$ zu derjenigen Symbolhypothese

$\overline{\overline{S}}_{k,p}^{(a)}$ aus allen Symbolhypothesen $\overline{\overline{\underline{S}}}_k^{(a)} = \left[ \overline{\overline{S}}_{k,1}^{(a)} ,.., \overline{\overline{S}}_{k,p}^{(a)} ,.., \overline{\overline{S}}_{k,P}^{(a)} \right]$ im Layer $k$ berechnet, die dem im

Layer $k\pm1$ ermittelten exakteren Schätzwert $\hat{s}_{k\pm1}^{(a)}$ achfolgt und gleichzeitig am nächsten zu den in den Layer $k$ transformierten empfangenen Symbolen $\underline{r}=[r_1 .. r_k .. r_{Nr}]$ positioniert ist.

Anschließend wird ausgehend vom selben im vorherigen Layer $k\pm1$ ermittelten exakteren Schätzwert $\hat{s}_{k\pm1}^{(a)}$

die Pfadmetrik $M_{k,p}{}^{(a)}$ derjenigen Symbolhypothese $\overline{\overline{S}}_{k,p}{}^{(a)}$ aus allen übrigen Symbolhypothesen $\underline{\overline{\overline{S}}}_k = \left[ \overline{\overline{S}}_{k,1}{}^{(a)} ,.., \overline{\overline{S}}_{k,p}{}^{(a)} ,.., \overline{\overline{S}}_{k,P}{}^{(a)} \right]$ im Layer $k$ berechnet, die am zweitnächsten zu den in den Layer $k$ transformierten empfangenen Symbolen $\underline{r}=[r_1 \,..\, r_k \,..\, r_{Nr}]$ positioniert ist.

Sind ausgehend vom selben im vorherigen Layer $k\pm1$ ermittelten exakteren Schätzwert $\hat{s}_{k\pm1}{}^{(a)}$ die Pfadmetriken

$M_{k,p}{}^{(a)}$ zu allen übrigen Symbolhypothesen $\underline{\overline{\overline{S}}}_k = \left[ \overline{\overline{S}}_{k,1}{}^{(a)} ,.., \overline{\overline{S}}_{k,p}{}^{(a)} ,.., \overline{\overline{S}}_{k,P}{}^{(a)} \right]$ im Layer $k$ berechnet worden und noch nicht eine der für den Layer $k$ ermittelten Anzahl $M_k$ von zu berechnenden Zweig- und/oder Pfadmetriken berechnet worden, so werden ausgehend im vorherigen Layer $k\pm1$ ermittelten exakteren Schätzwert $\hat{s}_{k\pm1}{}^{(a)}$, die die jeweils nächst größere Pfadmetrik $M_{k\pm1}{}^{(a)}$ aufweisen, wiederum die Pfadmetriken $M_{k,p}{}^{(a)}$ derjenigen Symbolhypothese $\overline{\overline{S}}_{k,p}{}^{(a)}$ aus

allen übrigen Symbolhypothesen $\underline{\overline{\overline{S}}}_k = \left[ \overline{\overline{S}}_{k,1}{}^{(a)} ,.., \overline{\overline{S}}_{k,p}{}^{(a)} ,.., \overline{\overline{S}}_{k,P}{}^{(a)} \right]$ im Layer $k$ berechnet, die jeweils am nächsten zu den in den Layer $k$ transformierten empfangenen Symbolen $\underline{r}=[r_1 \,..\, r_k \,..\, r_{Nr}]$ positioniert sind.

Dieser Vorgang wird wiederum mit allen übrigen im Layer $k\pm1$ ermittelten exakteren Schätzwerten $\hat{s}_{k\pm1}{}^{(a)}$ und

allen übrigen Symbolhypothesen $\overline{\overline{S}}_{k,p}{}^{(a)}$ zur Bestimmung eines dem im Layer $k\pm1$ ermittelten exakteren Schätzwerten

$\hat{s}_{k\pm1}{}^{(a)}$ im Layer $k$ nachfolgenden und zu ermittelnden exakteren Schätzwert $\hat{s}_k{}^{(a)}$ solange fortgesetzt, bis insgesamt eine für den Layer $k$ zu berechnende Anzahl $M_k$ von Zweig- und Pfadmetrik-Vergleichen im Layer $k$ ermittelt worden sind.

In einer dritten Ausführungsvariante wird für die Bestimmung von exakteren Schätzwerten $\hat{s}_k{}^{(a)}$ im jeweiligen

Layer $k$ ausgehend von allen $M_{k\pm1}$ im vorherigen Layer $k\pm1$ ermittelten exakteren Schätzwerten $\hat{s}_{k\pm1}{}^{(a)}$ jeweils eine

konstante Anzahl $P_k{}^{(1)}=P_k{}^{(2)}=...=P_k{}^{(Mk'')}=P_k$ von Symbolhypothesen $\overline{\overline{S}}_{k,p}{}^{(a)}$ aus allen Symbolhypothesen

$\underline{\overline{\overline{S}}}_k = \left[ \overline{\overline{S}}_{k,1}{}^{(a)} ,.., \overline{\overline{S}}_{k,p}{}^{(a)} ,.., \overline{\overline{S}}_{k,P}{}^{(a)} \right]$ ausgewählt, die jeweils am nächsten zu den in den Layer $k$ transformierten

empfangenen Symbolen $\underline{r}=[r_1 \,..\, r_k \,..\, r_{Nr}]$ positioniert sind. Auf diese Weise wird für jeden im vorherigen Layer $k\pm1$

ermittelten exakteren Schätzwert $\hat{s}_{k\pm1}{}^{(a)}$ jeweils mindestens eine nachfolgende Symbolhypothese $\overline{\overline{S}}_{k,p}{}^{(a)}$ aus allen

jeweils nachfolgenden Symbolhypothesen $\underline{\overline{\overline{S}}}_k = \left[ \overline{\overline{S}}_{k,1}{}^{(a)} ,.., \overline{\overline{S}}_{k,p}{}^{(a)} ,.., \overline{\overline{S}}_{k,P}{}^{(a)} \right]$ im Layer $k$ ausgewählt.

Für die Bestimmung der Anzahl $P_k{}^{(1)}=P_k{}^{(2)}=...=P_k{}^{(Mk'')}=P_k$ von Symbolhypothesen $\overline{\overline{S}}_{k,p}{}^{(a)}$ je weiterverfolgten

Pfad $a$ ist die für den Layer $k$ ermittelte Anzahl $M_k$ von zu berechnenden Pfadmetriken durch die maximale Anzahl $M$

von in jedem Layer $k$ weiterverfolgten exakteren Schätzwerten $\hat{s}_k{}^{(a)}$ zu dividieren. Da die Division üblicherweise keinen

ganzzahligen Wert für $P_k{}^{(1)}=P_k{}^{(2)}=...=P_k{}^{(Mk'')}=P_k$ liefert, ist in Analogie zu Gleichung (18) bzw. (19) bei der Bestimmung von ganzzahligen Werten für die Elemente des Vektors $\underline{M}$ der Least-Squares-Ansatz gemäß Gleichung (20) und (21)

heranzuziehen.

$$\left( \underline{P} = \left[ P_1,..,P_k,..,P_{N_I} \right]^T \right)_{LS} = \arg\left\{ \min_{P\in Z^{N_I}} \| \underline{P} - \underline{\overline{R}} \|^2 \right\}$$

$$= \arg\left\{ \min_{P\in Z^{N_I}} \left\{ \sum_{k=1}^{N_I} (P_k - \frac{N_B}{M} \cdot \frac{1/R_{k,k}}{\sum_{i=1}^{N_I} 1/R_{i,i}})^2 \right\} \right\} \qquad (20)$$

$$(\underline{P})_{LS} = \arg\left\{ \min_{P\in Z^{N_I}} \left\{ \sum_{k=1}^{N_I} (P_k - \frac{N_B \cdot (N_I - 1)}{M} \cdot \frac{1/R_{k,k}}{\sum_{i=1}^{N_I} 1/R_{i,i}})^2 \right\} \right\} \qquad (21)$$

Die vierte Ausführungsvariante stellt eine Abwandlung der dritten Ausführungsvariante dar, indem für die Bestimmung der Zweig- und/oder Pfadmetriken im jeweiligen Layer $k$ nicht von allen $M$ im vorherigen Layer $k\pm1$ ermittelten exakteren Schätzwerten $\hat{s}_{k\pm1}{}^{(a)}$, sondern von einer gegenüber $M$ reduzierten Anzahl $M_{k''}=M_k{}^{red}$ von im vorherigen Layer $k\pm1$ ermittelten exakteren Schätzwerten $\hat{s}_{k\pm1}{}^{(a)}$ ausgegangen wird, die gemäß Gleichung (22) jeweils gegenüber den restlichen im vorherigen Layer $k\pm1$ ermittelten exakteren Schätzwerten $\hat{s}_{k\pm1}{}^{(a)}$ eine deutlich geringere Pfadmetrik $M_{k\pm1}{}^{(a)}$ aufweisen.

$$M_k{}^{red} = Anzahl\left\{ M_{k\pm1}{}^{(a)} \mid M_{k\pm1}{}^{(a)} \ll M_{k\pm1}{}^{(b)}; \forall a \ne b \in \{1,..,M\} \right\} \qquad (22)$$

Die Überlebenspfade der nicht mehr weiterverfolgten und im vorherigen Layer $k\pm1$ ermittelten exakteren Schätzwerte $\hat{s}_{k\pm1}{}^{(a)}$ enden folglich im vorherigen Layer $k\pm1$.

Ausgehend von den Pfadmetriken der weiterverfolgten und im vorherigen Layer $k\pm1$ ermittelten exakteren Schätzwerte $\hat{s}_{k\pm1}{}^{(a)}$ wird in Analogie zur dritten Ausführungsvariante jeweils eine konstante Anzahl $P_k{}^{(1)}=P_k{}^{(2)}=...$ $=P_k{}^{(Mkred)}=P_k$ von Symbolhypothesen $\overline{\overline{s}}_{k,p}{}^{(a)}$ aus allen Symbolhypothesen $\underline{\overline{\overline{S}}}_k{}^{(a)} = \left[ \overline{\overline{s}}_{k,1}{}^{(a)},..,\overline{\overline{s}}_{k,p}{}^{(a)},..,\overline{\overline{s}}_{k,P}{}^{(a)} \right]$ in Anlehnung an Gleichung (20) ausgewählt.

In der fünften Ausführungsvariante wird in Analogie zur vierten Ausführungsvariante für die Bestimmung der Zweigund/oder Pfadmetriken im jeweiligen Layer $k$ nicht von allen $M$ im vorherigen Layer $k\pm1$ ermittelten exakteren Schätzwerten $\hat{s}_{k\pm1}{}^{(a)}$, sondern von einer gegenüber $M$ reduzierten Anzahl $M_{k''}=M_k{}^{red}$ von im vorherigen Layer $k\pm1$ ermittelten exakteren Schätzwerten $\hat{s}_{k\pm1}{}^{(a)}$ ausgegangen, die jeweils gegenüber den restlichen im vorherigen Layer $k\pm1$ ermittelten exakteren Schätzwerten $\hat{s}_{k\pm1}{}^{(a)}$ eine deutlich geringere Pfadmetrik $M_{k\pm1}{}^{(a)}$ aufweisen. Im Gegensatz zur vierten Ausführungsvariante wird in der fünften Ausführungsvariante ausgehend von den Pfadmetriken $M_{k\pm1}{}^{(a)}$ der insgesamt $M_k{}^{red}$ weiterverfolgten und im vorherigen Layer $k\pm1$ ermittelten exakteren Schätzwerte $\hat{s}_{k\pm1}{}^{(a)}$ nicht jeweils eine konstante Anzahl $P_k{}^{(1)}=P_k{}^{(2)}=...=P_k{}^{(Mk'')}=P_k$ von Symbolhypothesen $\overline{\overline{s}}_{k,p}{}^{(a)}$ aus allen Symbolhypothesen $\underline{\overline{\overline{S}}}_k{}^{(a)} = \left[ \overline{\overline{s}}_{k,1}{}^{(a)},..,\overline{\overline{s}}_{k,p}{}^{(a)},..,\overline{\overline{s}}_{k,P}{}^{(a)} \right]$ ausgewählt, sondern jeweils eine von der Pfadmetrik $M_{k\pm1}{}^{(a)}$ des im vorherigen Layer $k\pm1$ ermittelten und weiterverfolgten exakteren Schätzwerts $\hat{s}_{k\pm1}{}^{(a)}$ abhängige Anzahl $P_k{}^{(1)},P_k{}^{(2)},...P_k{}^{(Mk'')}$ von Pfadmetriken berechnet. Die Anzahl $P_k{}^{(a)}$ von zu berechnenden Pfadmetriken ist direkt proportional zur Höhe der Pfad-

metrik $M_{k\pm1}{}^{(a)}$ des im vorherigen Layer $k\pm1$ ermittelten exakteren Schätzwert $\hat{s}_{k\pm1}{}^{(a)}$, die zur Berechnung der jeweiligen Pfadmetriken $M_k{}^{(a)}$ im Layer $k$ weiterverfolgt werden. Auch hier kann mithilfe des Least-Squares-Ansatzes in Anlehnung an Gleichung (18) gemäß Gleichung (23) ein ganzzahliger Wert für die Anzahl $P_k{}^{(a)}$ von Pfadmetriken ausgehend vom Wert der Pfadmetrik $M_{k\pm1}{}^{(a)}$ des im vorherigen Layer $k\pm1$ ermittelten Schätzwerts $\hat{s}_{k\pm1}{}^{(a)}$ bestimmt werden.

$$\left(\underline{P}_k = \left[ P_k{}^{(1)},...,P_k{}^{(M_k{}^{red})} \right]\right)_{LS} = \arg\left\{ \min_{\underline{P}_k \in Z^{N_t}} \| \underline{P}_k - \overline{M}_{k\pm1} \|^2 \right\}$$

$$= \arg\left\{ \min_{\underline{P}_k \in Z^{N_t}} \left\{ \sum_{a=1}^{M_k{}^{red}} \left( P_k{}^{(a)} - \cdot \frac{M_k}{M_k{}^{red}} \cdot \frac{M_{k\pm1}{}^{(a)}}{\sum_{a=1}^{M_k{}^{red}} M_{k\pm1}{}^{(a)}} \right)^2 \right\} \right\} \qquad (23)$$

Im Folgenden wird anhand des Flussdiagramms in Fig. 3A eine erste Ausführungsform des erfindungsgemäßen Verfahrens zur Detektion von gesendeten Symbolen in einem Multi-Layer-Übertragungssystem mit reduzierter Zweigmetrikberechnung erläutert, bei der eine obere Dreiecksmatrix $R^o$ zur Anwendung kommt.

Die im Folgenden dargestellten Verfahrensschritte S10 bis S60 werden bei Verwendung einer oberen Dreiecksmatrix $R^o$ sukzessive beginnend beim Layer $N_t$ und endend beim Layer 1 durchgeführt:

Im ersten Verfahrensschritt S10 wird gemäß Gleichung (10A) ein grober Schätzwert $\tilde{s}_k{}^{(a)}$ für die im jeweiligen Layer $k$ - wobei $k$ eine Laufvariable für den aktuell in den einzelnen Verfahrensschritten S10 bis S60 des erfindungsgemäßen Verfahrens betrachteten Layer zwischen den Layern $N_t$ und 1 darstellt - und damit von der $k$-ten Sendeantenne gesendete Symbol $s_k$ ausgehend von zu jeweils einem Pfad $a$ gehörigen und bereits in vorherigen Berechnungsschritten für die Layer $N_t$ bis $k+1$ ermittelten exakteren Schätzwerten $\hat{s}_{Nt}{}^{(a)},...,\hat{s}_{k\pm1}{}^{(a)}$ für die in von der $N_t$-ten bis $k+1$-ten Sendeantenne gesendeten Symbole $s_{Nt},..,s_{k+1}$ berechnet.

Die Variable $a$ stellt hierbei einen von insgesamt bis zu $M$ je Layer $N_t$ bis 1 weiterverfolgten groben und/oder exakteren Schätzwerten für die im jeweiligen Layer N, bis 1 gesendeten Symbole dar und entspricht damit in Anlehnung an einen $M$-Algorithmus der Anzahl $M$ von je Stufe in einem Baum- und/oder Trellis-Diagramm weiterverfolgten Zuständen, die zur Mächtigkeit $|S|$ des in der Modulation verwendeten Symbolalphabets korrespondiert. Die jeweils über die einzelnen Stufen des Baum- und/oder Trellis-Diagramms miteinander verbundenen exakteren Schätzwerte $\hat{s}_{Nt}{}^{(a)},...,\hat{s}_{k\pm1}{}^{(a)}$ bilden jeweils einen Überlebenspfad $a$. Anstelle einer zur Mächtigkeit $|S|$ des verwendeten Symbolalphabets $S$ korrespondierenden fixen Anzahl $M$ von Schätzwerten bzw. Zuständen je Layer kann alternativ eine vom Signalpegel des im Layer $k$ geschätzten Symbols $s_k$ abhängige Anzahl $M_k$ von Schätzwerten bzw. Zuständen je Layer zum Einsatz kommen.

Gemäß Gleichung (10A) ergibt sich der jeweilige grobe Schätzwert $\tilde{s}_k{}^{(a)}$ für das im jeweiligen Layer $k$ geschätzte und von der $k$-ten Sendeantenne abgestrahlte Symbol $s_k$ aus der räumlichen Entzerrung der in den Layer $k$ transformierten, von der 1-ten bis $N_t$-ten Empfangsantenne jeweils empfangenen Symbole $r_1,..,r_k,..,r_{Nr}$ von den in den Layer $k$ transformierten, zum jeweiligen Pfad $a$ gehörigen exakteren Schätzwerte $\hat{s}_{Nt}{}^{(a)},...,\hat{s}_{k\pm1}{}^{(a)}$ für die von der $N_t$-ten bis $k+1$-ten Sendeantenne gesendeten Symbole $s_{Nt},..,s_{k+1}$. Diese zum jeweiligen Pfad $a$ gehörigen exakteren Schätzwerte $\hat{s}_{Nt}{}^{(a)},...,\hat{s}_{k\pm1}{}^{(a)}$ für die von der $N_t$-ten bis $k+1$-ten Sendeantenne gesendeten Symbole $s_{Nt},..,s_{k+1}$ stellen die Vorgängerzustände bzw. die Pfadhistorie des Zustandes dar, der zum aktuell für den Layer $k$ zu ermittelnden groben Schätzwert $\tilde{s}_k{}^{(a)}$ korrespondiert. Die Transformation der von der 1-ten bis $N_t$-ten Empfangsantenne jeweils empfangenen Symbole $r_1,..,r_k,..,r_{Nr}$ in den Layer $k$ erfolgt durch Gewichtung bzw. Vorfilterung der von der 1-ten bis $N_t$-ten Empfangsantenne jeweils empfangenen Symbole $r_1,..,r_k,..,r_{Nr}$ in einem Vorfilter mit einer orthogonalen Matrix $Q^H$, die aus einer $Q \cdot R$-Zerlegung der das Übertragungsverhalten im Multi-Layer-Übertragungssystem zwischen den $N_t$ Sendeantennen und den $N_r$-Empfangsantennen beschreibenden Übertragungskanalmatrix $H$ hervorgeht. Die Transformation der zum jeweiligen Pfad $a$ gehörigen exakteren Schätzwerte $\hat{s}_{Nt}{}^{(a)},...,\hat{s}_{k\pm1}{}^{(a)}$ für die von der $N_t$-ten bis $k+1$-ten Sendeantenne gesendeten Symbole $s_{Nt},...,s_{k+1}$ in den Layer $k$ erfolgt durch Gewichtung der exakteren Schätzwerte $\hat{s}_{Nt}{}^{(a)},...,\hat{s}_{k+1}{}^{(a)}$ mit der oberen aus der $Q \cdot R$-Zerlegung der Übertragungskanalmatrix $H$ hervorgegangenen Dreiecksmatrix $R^o$.

Für jeden einzelnen gemäß Verfahrensschritt S10 berechneten groben Schätzwert $\tilde{s}_k{}^{(a)}$ für das im jeweiligen Layer $k$ gesendete Symbol $s_k$ aus allen bis zu $M$ bzw. $M_k$ je Layer $k$ zu berechnenden groben Schätzwerten wird im nächsten Verfahrensschritt S20 jeweils eine Voronoi-Region $V(\tilde{s}_k^{(a)})$ mit den Eigenschaften gemäß Gleichung (11) ermittelt, in deren Zentrum der jeweilige grobe Schätzwert $\tilde{s}_k^{(a)}$ positioniert ist und jeweils eine Anzahl $P$ von Symbolhypothesen $\overline{\underline{s}}_k^{(a)}$ des verwendeten Symbolalphabets enthält, die gegenüber der Gesamtanzahl

$M$ von Symbolen des Symbolalphabets reduziert ist.

Zur Bestimmung einer Voronoi-Region um ein bestimmtes Zentrum sind verschiedene Algorithmen bekannt. Da diese für eine Echtzeitverarbeitung nicht geeignet sind, werden bei verwendeten Symbolalphabet und für verschieden Werte von $P$ und für jeweils bestimmte Symbolhypothesen aus einem Satz von insgesamt P Symbolhypothesen in Tabellen der jeweils dazugehörige obere, untere, linksseitige und rechtsseitige Grenzwert der Voronoi-Region abgelegt. Durch Vergleich des ermittelten groben Schätzwerts $\tilde{s}_k^{(a)}$ mit den einzelnen Grenzwerten, die in Hardware sehr einfach realisierbar ist, kann somit sehr schnell bei gegebenen Symbolalphabet und gegebenen Wert $P$ die zugehörige Voronoi-Region und die dazugehörigen P Symbolhypothesen ermittelt werden.

Im darauffolgenden Verfahrensschritt S30 werden für jede Voronoi-Region $V(\tilde{s}_k^{(a)})$ mit $a=1,..,M$ des Layers $k$ die einzelnen euklidischen Distanzen $\underline{d}_k^{(a)} =[d_{k,1}^{(a)},..,d_{k,p}^{(a)},..,d_{k,p}^{(a)}]$ zwischen dem zur jeweiligen Voronoi-Region $V(\tilde{s}_k^{(a)})$ gehörigen groben Schätzwert $\tilde{s}_k^{(a)}$ für das im Layer $k$ gesendete Symbol $s_k$ und allen insgesamt $P$ zählenden, in der jeweiligen Voronoi-Region $V(\tilde{s}_k^{(a)})$ befindlichen einzelnen Symbolhypothesen

$$\overline{\underline{s}}_k^{(a)} = \left[ \overline{s}_{k,1}^{(a)} ,.., \overline{s}_{k,p}^{(a)} ,.., \overline{s}_{k,P}^{(a)} \right]$$ ermittelt.

Für den Fall, dass keine der Mächtigkeit $|S|$ des verwendeten Symbolalphabets entsprechende Anzahl $M$ von groben Schätzwerten $\tilde{s}_k^{(a)}$ bzw. exakteren Schätzwerten $\hat{s}_k^{(a)}$ je Layer, sondern eine von der Höhe des Signalpegels des von der jeweiligen $k$-ten Sendeantenne abgestrahlten Symbols $s_k$ abhängige Anzahl $M_k$ von groben Schätzwerten $\tilde{s}_k^{(a)}$ bzw. exakteren Schätzwerten $\hat{s}_k^{(a)}$ je Layer $k$ ermittelt wird, ist eine der fünf obig erläuterten Ausführungsvarianten zur Aufteilung der je Layer $k$ zu berechnende Anzahl $M_k$ von Zweig- und/oder Pfadmetriken auf eine bestimmte Anzahl $M_{k''}$ von je Layer $k$ zu bestimmenden groben Schätzwerten $\tilde{s}_k^{(a)}$ und auf eine bestimmte Anzahl $\underline{P}_{k''} =[P_k^{(1)},...,P_k^{(Mk'')}]$ von zu berechnenden Zweig- und/oder Pfadmetriken ausgehend von jedem der insgesamt $M_{k''}$ im Layer $k$ ausgewählten groben Schätzwerten $\tilde{s}_k^{(a)}$ auszuwählen.

Die Bestimmung der einzelnen euklidischen Distanzen $\underline{d}_k^{(a)} =[d_{k,1}^{(a)},...,d_{k,p}^{(a)},..,d_{k,p}^{(a)}]$ zwischen dem zur jeweiligen Voronoi-Region $V(\tilde{s}_k^{(a)})$ gehörigen groben Schätzwert $\tilde{s}_k^{(a)}$ für das im Layer $k$ gesendete Symbol $s_k$ und jeweils einem der in der jeweiligen Voronoi-Region $V(\tilde{s}_k^{(a)})$ befindlichen Symbolhypothesen

$$\overline{\underline{s}}_k^{(a)} = \left[ \overline{s}_{k,1}^{(a)} ,.., \overline{s}_{k,p}^{(a)} ,.., \overline{s}_{k,P}^{(a)} \right]$$ entspricht einer Zweigmetrik-Berechnung zwischen zwei aufeinander folgenden Stufen in einem Baum- oder Trellis-Diagramm beim M-Algorithmus oder bei jedem anderen auf dem Viterbi-Algorithmus basierenden Suchalgorithmus.

Für jede einzelne Symbolhypothese $\overline{s}_{k,p}^{(a)}$, die sich in der zum jeweiligen Pfad $a$ des Layers $k$ gehörigen Voronoi-Region $V(\tilde{s}_k^{(a)})$ befindet, wird im darauffolgenden Verfahrensschritt S40 die zugehörige Pfadmetrik $M_{k,p}^{(a)}$ aus der Addition der für die Symbolhypothese $\overline{s}_{k,p}^{(a)}$ ermittelten euklidischen Distanz $d_{k,p}^{(a)}$, die sich in der zum jeweiligen Pfad $a$ des Layers k gehörigen Voronoi-Region $V(\tilde{s}_k^{(a)})$ befindet, und der Pfadmetrik $M_{k+1}^{(a)}$ der zum groben Schätzwert $\tilde{s}_k^{(a)}$ des im Layer $k$ gesendeten Symbols $s_k$ gehörigen Pfadhistorie $[\hat{s}_{k+1}^{(a)},..,\hat{s}_N^{(a)}]$, welche sich aus den in den vorherigen Layer $N_t$ bis $k+1$ ermittelten, zum Pfad $a$ gehörigen exakteren Schätzwerten $\hat{s}_{Nt}^{(a)},...,\hat{s}_{k+1}^{(a)}$ für die in den Layern $N_t$ bis $k+1$ gesendeten Symbolen $s_{Nt},...,s_{k+1}$ zusammensetzt, berechnet. Die Pfadmetrik $M_{k+1}^{(a)}$ der Pfadhistorie $[\hat{s}_{k+1}^{(a)},..,\hat{s}_{Nt}^{(a)}]$, die zum groben Schätzwert $\tilde{s}_k^{(a)}$ des im Layer $k$ gesendeten Symbols $s_k$ gehört, setzt sich wiederum aus den aufsummierten, jeweils minimalen euklidischen Distanzen $d_{Nt}^{(a)},..,d_{k+1}^{(a)}$ zwischen den in den Layern $N_t$ bis $k+1$ in vorherigen Berechnungsschritten bereits ermittelten groben Schätzwerten $\tilde{s}_{Nt}^{(a)},...,\tilde{s}_k+1^{(a)}$ und exakteren Schätzwerten $\hat{s}_{Nt}^{(a)},...,\hat{s}_{k+1}^{(a)}$ zusammen.

Im darauffolgenden Verfahrensschritt S50 werden gemäß Gleichung (12) aus allen im Layer $k$ gemäß Verfahrensschritt S40 ermittelten Pfadmetriken $\underline{M}_k^{(a)'}=[M_{k,1}^{(a)},...,M_{k,p}^{(a)},...,M_{k,p}^{(a)}]$ mit $a=1,..,M$ die bis zu $M$ bzw. $M_k$ kleinsten

Pfadmetriken $M_{k,p}{}^{(a)}$ identifiziert und zu Pfadmetrikvektor $\underline{M}_k = [M_k{}^{(1)},..,M_k{}^{(a)},..M_k{}^{(M)}]$ bzw. $\underline{M}_k = [M_k{}^{(1)},..,M_k{}^{(a)},..M_k{}^{(Mk)}]$ zusammengefasst. Die zu den $M$ bzw. $M_k$ kleinsten Pfadmetriken gehörigen Symbolhypothesen $\overset{=}{S}_{k,p}{}^{(a)}$ stellen gemäß Gleichung (13) die im Layer $k$ weiterverfolgten exakteren Schätzwerte $\hat{\underline{s}}_k = [s_k{}^{(1)},...,s_k{}^{(M)}]$ bzw. $\underline{s}_k = [\hat{s}_k{}^{(1)},...,\hat{s}_k{}^{(Mk)}]$ dar.

Im abschließenden Verfahrensschritt S60 werden gemäß Gleichung (14A) aus allen bis zu $M$ bzw. $M_1$ zählenden, im Layer 1 ermittelten Pfadmetriken $\underline{M}_1 = [M_1{}^{(1)},..,M_1{}^{(a)},..,M_1{}^{(M)}]$ bzw. $\underline{M}_1 = [M_1{}^{(1)},..,M_1{}^{(a)},..,M_1{}^{(M1)}]$ die kleinste Pfadmetrik $M_{\min}$ ermittelt. Der zur kleinsten Pfadmetrik $M_{\min}$ gehörige Pfad $a$ mit den in den einzelnen Layern ermittelten exakteren Schätzwerte $(\underline{s}^{(a)})$ stellt gemäß Gleichung (15A) die optimalen Schätzwerte $\underline{s} = [\hat{s}_1,...,\hat{s}_{Nt}]$ für die in allen Layern gesendeten Symbole (s) dar.

Im Flussdiagramm der Fig. 3B ist die zweite Ausführungsform des erfindungsgemäßen Verfahrens zur Detektion von gesendeten Symbolen in einem Multi-Layer-Übertragungssystem mit reduzierter Zweigmetrikberechnung dargestellt, bei der eine untere Dreiecksmatrix $R^u$ Verwendung findet:

Im ersten Verfahrensschritt S100 wird gemäß Gleichung (10B) ein grober Schätzwert $\tilde{s}_k{}^{(a)}$ für das im jeweiligen Layer $k$ und damit von der $k$-ten Sendeantenne gesendete Symbol $s_k$ ausgehend von zu jeweils einem Pfad $a$ gehörigen und bereits in vorherigen Berechnungsschritten für die Layer 1 bis $k$-1 ermittelten exakteren Schätzwerte $\hat{s}_1{}^{(a)},...,\hat{s}_{k-1}{}^{(a)}$ für die in von der 1-ten bis $k$-1-ten Sendeantenne gesendeten Symbole $s_1,..,s_{k-1}$ berechnet.

Die Variable $a$ stellt auch in der zweiten Ausführungsform einen von insgesamt bis zu $M$ bzw. $M_k$ je Layer $N_t$ bis 1 weiterverfolgten groben und/oder exakteren Schätzwerten für die im jeweiligen Layer $N_t$ bis 1 gesendeten Symbole dar, wobei $M$ der Mächtigkeit $|S|$ des in der Modulation verwendeten Symbolalphabets entspricht und $M_k$ eine vom Signalpegel des im Layer $k$ geschätzten Symbols $s_k$ abhängige Anzahl von Schätzwerten bzw. Zuständen je Layer darstellt.

Gemäß Gleichung (10B) ergibt sich der jeweilige grobe Schätzwert $\tilde{s}_k{}^{(a)}$ für das im jeweiligen Layer $k$ geschätzte Symbol $s_k$ aus der räumlichen Entzerrung der in den Layer $k$ transformierten von der 1-ten bis $N_t$-ten Empfangsantenne jeweils empfangenen Symbole $r_1,..,r_k,..,r_{Nr}$ von in den Layer $k$ transformierten, zum jeweiligen Pfad $a$ gehörigen exakteren Schätzwerte $\hat{s}_1{}^{(a)},...,\hat{s}_{k-1}{}^{(a)}$ für die von der 1-ten bis $k$-1-ten Sendeantenne gesendeten Symbole. Die Transformation der von der 1-ten bis $N_t$-ten Empfangsantenne jeweils empfangenen Symbole $r_1,..,r_k,..,r_{Nr}$ in den Layer $k$ erfolgt durch Gewichtung bzw. Vorfilterung der von der 1-ten bis $N_t$-ten Empfangsantenne jeweils empfangenen Symbole $r_1,..,r_k,..,r_{Nr}$ in einem Vorfilter mit einer orthogonalen Matrix $Q^H$, die aus einer $Q \cdot R$-Zerlegung der das Übertragungsverhalten im Multi-Layer-Übertragungssystem zwischen den $N_t$ Sendeantennen und den $N_r$-Empfangsantennen beschreibenden Übertragungskanalmatrix $H$ hervorgeht. Die Transformation der zum jeweiligen Pfad $a$ gehörigen exakteren Schätzwerte $\hat{s}_1{}^{(a)},...,\hat{s}_{k-1}{}^{(a)}$ für die von der 1-ten bis $k$-1-ten Sendeantenne gesendeten Symbole $s_1,..,s_{k-1}$ in den Layer $k$ erfolgt durch Gewichtung der exakteren Schätzwerte $\hat{s}_1{}^{(a)},...,\hat{s}_{k-1}{}^{(a)}$ mit der unteren aus der $Q \cdot R$-Zerlegung der Übertragungskanalmatrix $H$ hervorgegangenen Dreiecksmatrix $R^u$.

Für jeden einzelnen gemäß Verfahrensschritt S100 berechneten groben Schätzwert $\tilde{s}_k{}^{(a)}$ für das im jeweiligen Layer $k$ geschätzte Symbol $s_k$ aus allen bis zu $M$ je Layer $k$ berechneten groben Schätzwerten wird in äquivalenter Weise zu Verfahrensschritt S20 der im Flussdiagramm der Fig. 3A dargestellten Ausführungsform im nächsten Verfahrensschritt S120 jeweils eine Voronoi-Region $V(\tilde{s}_k{}^{(a)})$ mit den Eigenschaften gemäß Gleichung (11) ermittelt.

Im darauffolgenden Verfahrensschritt S120 werden für jede Voronoi-Region $V(\tilde{s}_k{}^{(a)})$ des Layers $k$ die einzelnen euklidischen Distanzen $\underline{d}_k{}^{(a)} = [d_{k,1}{}^{(a)},..,d_{k,p}{}^{(a)},..,d_{k,P}]$ zwischen dem zur jeweiligen Voronoi-Region $V(\tilde{s}_k{}^{(a)})$ gehörigen groben Schätzwert $\tilde{s}_k{}^{(a)}$ für das im Layer $k$ geschätzte Symbol $s_k$ und allen insgesamt P zählenden, in der jeweiligen Voronoi-Region $V(\tilde{s}_k{}^{(a)})$ befindlichen einzelnen Symbolhypothesen $\underline{S}_k{}^{(a)} = \begin{bmatrix} \overset{=}{S}_{k,1}{}^{(a)} ,.., \overset{=}{S}_{k,p}{}^{(a)} ,.., \overset{=}{S}_{k,P}{}^{(a)} \end{bmatrix}$ ermittelt.

Für den Fall, dass eine von der Höhe des Signalpegels des von der jeweiligen $k$-ten Sendeantenne abgestrahlten Symbols $s_k$ abhängige Anzahl $M_k$ von groben Schätzwerten $\tilde{s}_k{}^{(a)}$ bzw. exakteren Schätzwerten $\hat{s}_k{}^{(a)}$ je Layer verwendet wird, ist in Analogie zur ersten Ausführungsform eine der fünf obig erläuterten Ausführungsvarianten zur Aufteilung der je Layer $k$ zu berechnende Anzahl $M_k$ von Zweig- und/oder Pfadmetriken auf eine bestimmte Anzahl $M_{k''}$ von je

Layer $k$ zu bestimmenden groben Schätzwerten $\tilde{s}_k{}^{(a)}$ und auf eine bestimmte Anzahl $\underline{P}_{k''} = [P_k{}^{(1)},...,P_k{}^{(Mk'')}]$ von zu berechnenden Zweig- und/oder Pfadmetriken ausgehend von jeden der insgesamt $M_{k''}$ im Layer $k$ ausgewählten groben Schätzwerten $\tilde{s}_k{}^{(a)}$ auszuwählen.

Die Bestimmung der einzelnen euklidischen Distanzen $\underline{d}_k{}^{(a)} = [d_{k,1}{}^{(a)},..,d_{k,p}{}^{(a)},..,d_{k,p}{}^{(a)}]$ zwischen dem zur jeweiligen Voronoi-Region $V(\tilde{s}_k{}^{(a)})$ gehörigen groben Schätzwert $\tilde{s}_k{}^{(a)}$ für das im Layer $k$ gesendete Symbol $s_k$ und jeweils einem der in der jeweiligen Voronoi-Region $V(\tilde{s}_k{}^{(a)})$ befindlichen Symbolhypothesen

$$\underline{\overline{s}}_k^{(a)} = \left[ \overline{s}_{k,1}^{(a)}, .., \overline{s}_{k,p}^{(a)}, .., \overline{s}_{k,P}^{(a)} \right]$$ entspricht einer Zweigmetrik-Berechnung zwischen zwei aufeinander folgenden Stufen ein einem Baum- oder Trellis-Diagramm beim M-Algorithmus oder jedem anderen auf dem Viterbi-Algorithmus basierenden Suchalgorithmus.

Für jede einzelne Symbolhypothese $\overline{s}_{k,p}^{(a)}$, die sich in der zum Pfad $a$ im Layer $k$ gehörigen Voronoi-Region $V(\tilde{s}_k^{(a)})$ befindet, wird im darauffolgenden Verfahrensschritt S130 die zugehörige Pfadmetrik $M_{k,p}^{(a)}$ aus der Addition der für die Symbolhypothese $\overline{s}_{k,p}^{(a)}$ ermittelten euklidischen Distanz $d_{k,p}^{(a)}$, die sich in der zum Pfad $a$ im Layer $k$ gehörigen Voronoi-Region $V(\tilde{s}_k^{(a)})$ befindet, und der Pfadmetrik $M_{k-1}^{(a)}$ der zum groben Schätzwert $\tilde{s}_k^{(a)}$ des im Layer $k$ gesendeten Symbols $s_k$ gehörigen Pfadhistorie $[\hat{s}_{k+1}^{(a)},..,\hat{s}_{Nt}^{(a)}]$, welche sich aus den in den vorherigen Layer 1 bis $k$-1 ermittelten und zum Pfad $a$ gehörigen exakteren Schätzwerten $\hat{s}_1^{(a)},..,\hat{s}_{k-1}^{(a)}$ für die in den Layern 1 bis $k$-1 gesendeten Symbolen $s_1,..,s_{k-1}$ zusammensetzt, berechnet. Die Pfadmetrik $M_{k-1}^{(a)}$ der zum groben Schätzwert $\tilde{s}_k^{(a)}$ des im Layer $k$ geschätzten Symbols $s_k$ gehörigen Pfadhistorie $[\hat{s}_{k+1}^{(a)},..,\hat{s}_{Nt}^{(a)}]$ setzt sich wiederum aus den aufsummierten euklidischen Distanzen zwischen den in den Layern 1 bis $k$-1 in vorherigen Berechnungsschritten bereits ermittelten groben Schätzwerten $\tilde{s}_1^{(a)},..,\tilde{s}_{k-1}^{(a)}$ und exakteren Schätzwerten $\hat{s}_1^{(a)},..,\hat{s}_{k-1}^{(a)}$ zusammen.

Im darauffolgenden Verfahrensschritt S140 werden gemäß Gleichung (12) aus allen im Layer $k$ gemäß Verfahrensschritt S40 ermittelten Pfadmetriken $\underline{M}_k^{(a)'}=[M_{k,1}^{(a)},..,M_{k,p}^{(a)},..,M_{k,p}^{(a)}]$ mit $a=1,..,M$ die bis zu $M$ bzw. $M_k$ kleinsten Pfadmetriken $M_{k,p}^{(a)}$ identifiziert und zu Pfadmetrikvektor $\underline{M}_k=[M_k^{(1)},..,M_k^{(a)},..M_k^{(M)}]$ bzw. $\underline{M}_k=[M_k^{(1)},..,M_k^{(a)},..M_k^{(Mk)}]$ zusammengefasst. Die zu den $M$ bzw. $M_k$ kleinsten Pfadmetriken gehörigen Symbolhypothesen $s_{k,p}$ stellen gemäß Gleichung (13) die im Layer $k$ weiterverfolgten exakteren Schätzwerte $\underline{s}_k=[\hat{s}_k^{(1)},..,\hat{s}_k^{(M)}]$ bzw. $\underline{s}_k=[\hat{s}_k^{(1)},..,\hat{s}_k^{(Mk)}]$ dar.

Im abschließenden Verfahrensschritt S150 werden gemäß Gleichung (14b) aus allen bis zu $M$ bzw. $M_k$ zählenden, im Layer $N_t$ ermittelten Pfadmetriken $\underline{M}_{Nt}=[M_{Nt}^{(1)},..,M_{Nt}^{(a)},..,M_{Nt}^{(M)}]$ bzw. $\underline{M}_{Nt}=[M_{Nt}^{(1)},..,M_{Nt}^{(a)},..,M_{Nt}^{(Mk)}]$ die kleinste Pfadmetrik $M_{min}$ ermittelt. Der zur kleinsten Pfadmetrik $M_{min}$ gehörige Pfad $a$ mit den in den einzelnen Layern ermittelten exakteren Schätzwerte $(\underline{s}^{(a)})$ stellt gemäß Gleichung (15B) die optimalen Schätzwerte $\underline{s}=[\hat{s}_1,..,\hat{s}_{Nt}]$ für die in allen Layern gesendeten Symbole $(\underline{s})$ dar.

In Fig. 4 ist das Blockdiagramm der erfindungsgemäßen Vorrichtung zur Detektion von gesendeten Symbolen in einem Multi-Layer-Übertragungssystem mit reduzierter Zweigmetrikberechnung dargestellt.

In den $N_r$ =3 Empfangsantennen $1_1$, $1_2$ und $1_3$ werden die aus insgesamt $N_t$ überlagerten Sendesignalen $\underline{s}$ jeweils zusammengesetzten Empfangssignale $r_1$, $r_2$ und $r_3$ empfangen und dem Vorfilter 2 zugeführt, in dem eine Vorfilterung der Empfangssignale $\underline{r}=[r_1\ r_2\ r_3\ \underline{0}_{Ntx1}]$ mit der orthogonalen Matrix $Q^H$ als Vorfiltermatrix erfolgt.

Die vorgefilterten Empfangssignale $Q^H \cdot \underline{r}$ werden einem Maximum-Likelihood-Sequenz-Schätzer 3 zugeführt, der im Trellis- oder Baum-Diagramm durch Metrik-Minimierung auf der Basis der folgenden drei erfindungsgemäßen Verfahrensschritte einen optimalen Schätzwert $\underline{s}$ für den Sendesignalvektor $\underline{s}$ ermittelt:

• sukzessives Berechnen von mehreren groben Schätzwerten $\tilde{s}_k^{(a)}$ für jeden Layer $k$ durch sukzessives Lösen des Gleichungssystems der Metrik $M(\ M(\overline{\underline{s}}),$

• sukzessives Ermitteln eines exakteren Schätzwerts $\hat{s}_k^{(a)}$ durch Minimierung der euklidischen Distanz zwischen dem zugehörigen groben Schätzwerts $\tilde{s}_k^{(a)}$ und einer gegenüber der Mächtigkeit $|S|$ des Symbolalphabets reduzierten Anzahl $P$ von Symbolhypothesen $\overline{\underline{s}}_k^{(a)}$, die im Zustandsdiagramm benachbart zum groben Schätzwerts $\tilde{s}_k^{(a)}$ positioniert sind und

• Detektion derjenigen exakteren Schätzwerte $\hat{s}_k^{(a)}$ aus einer Anzahl von bis zu $M$ bzw. $M_k$ exakteren Schätzwerten $\hat{s}_k^{(a)}$ als optimale Schätzwerte $\hat{s}_k$ der in den einzelnen Layern $k$ gesendeten Symbole $s_k$, die zum Gesamtpfad mit minimaler Pfadmetrik $\underline{M}^{(a)}$ gehörigen.

In Fig. 5 ist die Bitfehlerrate - BER - in Abhängigkeit des Signal-Rausch-Verhältnisses für unterschiedliche Detektions-Algorithmen und für eine unterschiedliche Anzahl von Zuständen dargestellt. Die Detektionsalgorithmen nach dem Stand der Technik - Zero-Forcing-Algorithmus (ZF-Detektor), Minimum-Mean-Square-Error-Algorithmus (MMSE-Detektor), Zero-Forcing-Algorithmus kombiniert mit QR-Zerlegung mit oder ohne Sortierung, Minimum-Mean-Square-Error-Algorithmus kombiniert mit QR-Zerlegung mit oder ohne Sortierung, M-Algorithmus mit QR-Zerlegung bei $M=5$ Zuständen ergeben deutlich schlechtere Ergebnisse als der erfindungsgemäße M-Algorithmus mit QR-Zerlegung bei $M=5$ Zuständen und reduzierter Zweigmetrikberechnung $P=3$.

Die Erfindung ist nicht auf die dargestellten Ausführungsformen beschränkt. Das Verfahren arbeitet bevorzugt computergestützt oder gestützt durch einen digitalen Signalprozessor. Alle beschriebenen und/oder gezeichneten Merkmale sind im Rahmen der Erfindung miteinander kombinierbar. Insbesondere sind die Ausführungsbeispiele der Figuren 3A und 3B miteinander kombinierbar.

**Patentansprüche**

1. Verfahren zur Detektion von in einem Zeitpunkt von einer Anzahl $N_t$ von Sendeantennen jeweils gesendeten Symbolen ($s_1,..,s_k,..,s_{N_t}$) aus von einer Anzahl $N_r$ von Empfangsantennen jeweils empfangenen Symbolen ($r_1,..,r_k,..,r_{N_r}$) in einem Multi-Layer-Übertragungssystem mit folgenden sukzessive für jeden Layer $k$, beginnend beim Layer $N_t$ und endend beim Layer 1, durchgeführten Verfahrensschritten:

   • Berechnen einesgroben Schätzwertes ($\tilde{s}_1^{(1)}$) für das im ersten Layer zu schätzende Symbol ($s_1$) bzw. einer Anzahl $M$ von groben Schätzwerten $\tilde{s}_k^{(1)},..,\tilde{s}_k^{(a)},..,\tilde{s}_k^{(M)}$ für das in einem Layer $k$ zu schätzende Symbol ($s_k$) als mit dem inversen Diagonalelement ($1/R_{k,k}$) des Layers $k$ einer triangularisierten Übertragungsmatrix ($R$) gewichteten Differenz zwischen den in den Layer $k$ mittels der triangularisierten Übertragungsmatrix ($R$) transformierten empfangenen Symbolen ($r_1,..,r_k,..,r_{N_r}$) und den in den Layer $k$ transformierten und in jeweils einem Pfad $a$ in einem Zustands-Diagramm vorausgehenden und bereits ermittelten exakteren Schätzwerten ($\hat{s}_1^{(1)},...,\hat{s}_{k-1}^{(1)},...,\hat{s}_1^{(a)},...,\hat{s}_{k-1}^{(a)},...,\hat{s}_1^{(M)},...,\hat{s}_{k-1}^{(M)},...,\hat{s}_{N_t}^{(M)}$) für in einem Layer $k+1$ bis $N_t$ zu schätzende Symbole ($s_{k+1},..,s_{N_t}$), wobei zum Zustandsdiagramm gehörige Zustände sich aus Symbolhypothesen ($\overline{\overline{\underline{s}}}_k^{(a)}$) für die in den Layern $k$ jeweils zu schätzenden Symbole ($s_{k+1},..,s_{N_t}$) ergeben,

   • Ermitteln einer Voronoi-Region ($V(\tilde{s}_k^{(1)}),..,V(\tilde{s}_k^{(a)}),..,V(\tilde{s}_k^{(M)})$) in einem Konstellationsdiagramm für jeden im Layer $k$ ermittelten groben Schätzwert ($\tilde{s}_k^{(1)},..,\tilde{s}_k^{(a)},..,\tilde{s}_k^{(M)}$), in dessen Zentrum der jeweilige grobe Schätzwert ($\tilde{s}_k^{(1)},..,\tilde{s}_k^{(a)}),..,\tilde{s}_k^{(M)}$) liegt, mit einer gegenüber der Anzahl $M$ reduzierten Anzahl $P$ von Symbolhypothesen ($\overline{\overline{\underline{s}}}_k^{(1)},..,\overline{\overline{\underline{s}}}_k^{(a)},..,\overline{\overline{\underline{s}}}_k^{(M)}$) für das im Layer $k$ geschätzte Symbol ($s_k$),

   • Ermitteln jeweils einer euklidischen Distanz ($\underline{d}_k^{(1)},..,\underline{d}_k^{(a)},...\underline{d}_k^{(M)}$) zwischen jedem einzelnen groben Schätzwert ($\tilde{s}_k^{(1)},...,\tilde{s}_k^{(a)},...,\tilde{s}_k^{(M)}$)des im Layer $k$ geschätzten Symbols ($s_k$) und allen in der zugehörigen Voronoi-Region ($V(\tilde{s}_k^{(1)}),..,V(\tilde{s}_k^{(a)}),..,V(\tilde{s}_k^{(M)})$) gelegenen Symbolhypothesen ($\overline{\overline{\underline{s}}}_k^{(1)},..,\overline{\overline{\underline{s}}}_k^{(a)},..,\overline{\overline{\underline{s}}}_k^{(M)}$) und Ermitteln einer Pfadmetrik ($\underline{M}_k^{(1)},..,\underline{M}_k^{(a)},..,\underline{M}_k^{(M)}$) für jede einzelne Symbolhypothese ($\overline{\overline{\underline{s}}}_k^{(1)},..,\overline{\overline{\underline{s}}}_k^{(a)},..,\overline{\overline{\underline{s}}}_k^{(M)}$) im Layer $k$ durch Addition der jeweils ermittelten euklidischen Distanz ($\underline{d}_k^{(1)},...,\underline{d}_k^{(a)},...,\underline{d}_k^{(M)}$) und einer Pfadmetrik ($\underline{M}_{k+1}^{(1)},...,\underline{M}_{k+1}^{(a)},...,\underline{M}_{k+1}^{(M)}$) aus aufsummierten minimalen euklidischen Distanzen ($\underline{d}_{k+1}^{(1)},...,\underline{d}_{k+1}^{(a)},...,\underline{d}_{k+1}^{(M)},..,\underline{d}_{N}^{(1)},...,\underline{d}_{N_t}^{(a)},..,\underline{d}_{N_t}^{(M)}$) zwischen im jeweiligen Pfad $a$ vorausgehenden exakteren Schätzwerten ($\hat{s}_{k+1}^{(a)},...,\hat{s}_{N_t}^{(a)}$) und groben Schätzwerten ($\tilde{s}_{k+1}^{(a)},...,\tilde{s}_{N_t}^{(a)}$) für im Layer $k+1$ bis $N_t$ geschätzte Symbole ($s_{k+1},..,s_{N_t}$),

   • Ermitteln von bis zu $M$ exakteren Schätzwerten ($\hat{s}_k^{(1)},...,\hat{s}_k^{(a)}..,\hat{s}_k^{(M)}$) für das im Layer $k$ geschätzte Symbol ($s_k$) als die zu den jeweils $M$ kleinsten Pfadmetriken ($M_{k,p}^{(a)}$) gehörigen Symbolhypothesen ($\overline{\overline{\underline{s}}}_{k,p}^{(a)}$) aus allen im Layer $k$ berechneten Pfadmetriken ($\underline{M}_k^{(1)},...,\underline{M}_k^{(a)},...,\underline{M}_k^{(M)}$) und

   • Ermitteln von optimalen Schätzwerten ($\hat{\underline{s}}$) für die in allen Layern geschätzten Symbole ($\underline{s}$) als die zum Pfad $a$ mit minimaler Pfadmetrik ($M_{1,p}^{(a)}$) im Layer 1 gehörigen exakteren Schätzwerte ($\hat{\underline{s}}^{(a)}$) der in allen Layern ge-

schätzten Symbole ($\underline{s}$).

2. Verfahren zur Detektion von in einem Zeitpunkt von einer Anzahl $N_t$ von Sendeantennen jeweils gesendeten Symbolen ($s_1,..,s_k,..,s_{N_t}$) aus von einer Anzahl $N_r$ von Empfangsantennen jeweils empfangenen Symbolen ($r_1,...,r_k,..,r_{N_r}$) in einem Multi-Layer-Übertragungssystem mit folgenden sukzessive für jeden Layer $k$, beginnend beim Layer 1 und endend beim Layer $N_t$, durchgeführten Verfahrensschritten:

• Berechnen eines groben Schätzwertes ($\tilde{s}_{N_t}^{(1)}$) für das im $N_t$-ten Layer zu schätzende Symbol ($s_{N_t}$) bzw. einer Anzahl $M$ von groben Schätzwerten ($\tilde{s}_k^{(1)},...,\tilde{s}_k^{(a)},...,\tilde{s}_k^{(M)}$) für das in einem Layer $k$ zu schätzende Symbol ($s_k$) als mit dem inversen Diagonalelement ($1/R_{k,k}$) des Layers $k$ einer triangularisierten Übertragungsmatrix ($R$) gewichteten Differenz zwischen den in den Layer $k$ mittels der triangularisierten Übertragungsmatrix ($R$) transformierten empfangenen Symbolen ($r_1,..,r_k,..,r_{N_r}$) und in den Layer $k$ transformierten und den in jeweils einem Pfad $a$ im Zustands-Diagramm vorausgehenden und bereits ermittelten exakteren Schätzwerten

$$\left(\hat{s}_1^{(1)},..,\hat{s}_{k-1}^{(1)},..,\ \hat{s}_1^{(a)},..,\hat{s}_{k-1}^{(a)},..,\hat{s}_1^{(M)},..,\hat{s}_{k-1}^{(M)}\ ..,\hat{s}_{N_t}^{(M)}\right)$$ für im Layer 1 bis $k$-1 zu schätzende

Symbole ($s_1,..,s_{k-1}$), wobei zum Zustandsdiagramm gehörige Zustände sich aus Symbolhypothesen $\left(\underline{\overline{s}}_k^{(a)}\right)$

für die in den Layern $k$ jeweils zu schätzenden Symbole ($s_{k+1},..,s_{N_t}$) ergeben,

• Ermitteln einer Voronoi-Region ($V(\tilde{s}_1^{(1)},..,V(\tilde{s}_k^{(a)}),..,V(\tilde{s}_k^{(M)})$ in einem Konstellationsdiagramm für jeden im Layer $k$ ermittelten groben Schätzwert ($\tilde{s}_1^{(1)},...,\tilde{s}_k^{(a)},...,\tilde{s}_k^{(M)}$), in dessen Zentrum der jeweilige grobe Schätzwert ($\tilde{s}_1^{(1)},...,\tilde{s}_k^{(a)},...,\tilde{s}_k^{(M)}$) liegt, mit einer gegenüber der Anzahl $M$ reduzierten Anzahl $P$ von Symbolhypothesen ($\tilde{s}_1^{(1)},...,\tilde{s}_k^{(a)},...,\tilde{s}_k^{(M)}$) für das im Layer $k$ geschätzte Symbol ($s_k$),

• Ermitteln jeweils einer euklidischen Distanz ($\underline{d}_k^{(1)},...,\underline{d}_k^{(a)},...,\underline{d}_k^{(M)}$) zwischen jedem einzelnen groben Schätzwert ($\tilde{s}_k^{(1)},...,\tilde{s}_k^{(a)},...,\tilde{s}_k^{(M)}$) des im Layer $k$ geschätzten Symbols ($s_k$) und allen in der zugehörigen Voronoi-Region ($V(\tilde{s}_1^{(1)},..,V(\tilde{s}_k^{(a)}),..,V(\tilde{s}_k^{(M)})$ gelegenen Symbolhypothesen $\left(\underline{\overline{s}}_k^{(1)},..,\underline{\overline{s}}_k^{(a)},..,\underline{\overline{s}}_k^{(M)}\right)$ und Ermitteln einer Pfad-metrik ($\underline{M}_k^{(1)},...,\underline{M}_k^{(a)},...,\underline{M}_k^{(M)}$) für jede einzelne Symbolhypothese $\left(\underline{\overline{s}}_k^{(1)},..,\underline{\overline{s}}_k^{(a)},..,\underline{\overline{s}}_k^{(M)}\right)$ im Layer $k$ durch Addition der jeweils ermittelten euklidischen Distanz ($\underline{d}_k^{(1)},...,\underline{d}_k^{(a)},...,\underline{d}_k^{(M)}$) und einer Pfadmetrik ($\underline{M}_{k-1}^{(1)},...,\underline{M}_{k-1}^{(a)},...,\underline{M}_{k-1}^{(M)}$ aus aufsummierten minimalen euklidischen Distanzen ($\underline{d}_1^{(1)},...,\underline{d}_1^{(a)},...,\underline{d}_1^{(M)},...,\underline{d}_{k-1}^{(1)},...,\underline{d}_{k-1}^{(a)},...,\underline{d}_{k-1}^{(M)}$) zwischen im jeweiligen Pfad $a$ vorausgehenden exakteren Schätzwerten ($\hat{s}_1^{(a)},...,\hat{s}_{k-1}^{(a)}$) und groben Schätzwerten ($\tilde{s}_1^{(a)},...,\tilde{s}_{k-1}^{(a)}$) für im Layer 1 bis $k$-1 geschätzte Symbole ($s_1,..,s_{k-1}$),

• Ermitteln von bis zu $M$ exakteren Schätzwerten ($\hat{s}_k^{(1)},...,(\hat{s}_k^{(a)}...\hat{s}_k^{(M)}$) für das im Layer $k$ geschätzte Symbol ($s_k$) als die zu den jeweils M kleinsten Pfadmetriken ($M_{k,p}^{(a)}$) gehörigen Symbolhypothesen $\left(\underline{\overline{s}}_{k,p}^{(a)}\right)$ aus allen im Layer $k$ berechneten Pfadmetriken ($\underline{M}_k^{(1)},...,\underline{M}_k^{(a)},...,\underline{M}_k^{(M)}$) und

• Ermitteln von optimalen Schätzwerten ($s$) für die in allen Layern geschätzten Symbole ($s$) als die zum Pfad $a$ mit minimaler Pfadmetrik ($M_{N_t,p}^{(a)}$) im Layer $N_t$ gehörigen exakteren Schätzwerte ($\hat{\underline{s}}^{(a)}$) der in allen Layern geschätzten Symbole ($s$).

3. Verfahren zur Detektion nach Anspruch 1 oder 2,
   **dadurch gekennzeichnet,**
   **dass** zur Bestimmung der in den Layern 1 bis $N_t$ transformierten empfangenen Symbole ($r_1,..,r_k,..,r_{N_r}$) eine ($Q \cdot R$-)Zerlegung einer Übertragungskanalmatrix ($H$) zwischen den Sendeantennen und den Empfangsantennen in eine orthogonale Matrix ($Q^H$) und eine Dreiecksmatrix ($R$) und eine Gewichtung der empfangenen Symbole ($r_1,..,r_k,..,r_{N_r}$) mit der orthogonalen Matrix ($Q^H$) erfolgt.

4. Verfahren zur Detektion nach Anspruch 3,
   **dadurch gekennzeichnet,**
   **dass** zur Bestimmung der in den Layern 1 bis $N_t$ jeweils transformierten exakteren Schätzwerte ($\hat{s}_1^{(1)},...,\hat{s}_{k-1}^{(1)}$), ($\hat{s}_1^{(2)},...,\hat{s}_{k-1}^{(2)}),\hat{s}_1^{(M)},...,\hat{s}_{k-1}^{(M)}),...,\hat{s}_{N_t}^{(M)}$) eine Gewichtung der in jeweils einem Pfad $a$ im Zustands-Diagramm vorausgehenden und bereits ermittelten exakteren Schätzwerte ($\hat{s}_1^{(1)},...,\hat{s}_{k-1}^{(1)}),(\hat{s}_1^{(2)},...,\hat{s}_{k-1}^{(2)}),\hat{s}_1^{(M)},...,\hat{s}_{k-1}^{(M)}),...,\hat{s}_{N_t}^{(M)}$) mit zum jeweiligen Layer gehörigen Zeilenelementen ($R_{v,v}$) der Dreiecksmatrix ($R$) erfolgt.

**5.** Verfahren zur Detektion nach einem der Ansprüche 1 bis 4,
**dadurch gekennzeichnet,**
**dass** die Anzahl $M$ von zu berechnenden groben Schätzwerten ($\tilde{s}_k^{(1)},...,\tilde{s}_k^{(M)}$) für das im jeweiligen Layer $k$ gesendete Symbol ($s_k$) der Mächtigkeit ($|A|$) des verwendeten Symbolalphabets entspricht.

**6.** Verfahren zur Detektion nach Anspruch 3 oder 4,
**dadurch gekennzeichnet,**
**dass** die Anzahl $M$ von groben Schätzwerten ($\tilde{s}_k^{(1)},...,\tilde{s}_k^{(M)}$) für das im jeweiligen Layer $k$ gesendete Symbol ($s_k$) eine vom jeweiligen Layer $k$ abhängige Anzahl $M_{k'}$ von groben Schätzwerten ($\tilde{s}_k^{(1)},...,\tilde{s}_k^{(M)}$) ist, die indirekt proportional zum Diagonalelement $R_{k,k}$ des Layers $k$ in der Dreiecksmatrix $R$ ist, wobei die vom jeweiligen Layer $k$ abhängige Anzahl $M_{k'}$ von groben Schätzwerten ($\tilde{s}_k^{(1)},...,\tilde{s}_k^{(M)}$) sich nach folgender mathematischer Formel berechnet:

$$M_{k'} = N_B \cdot \frac{1/R_{k,k}}{\sum_{i=1}^{N_t} 1/R_{i,i}}$$

wobei
$N_B$ die Gesamtzahl der in allen Layern zu berechnenden euklidischen Distanzen ist.

**7.** Vorrichtung zur Detektion von in einem Zeitpunkt von einer Anzahl ($N_t$) von Sendeantennen jeweils gesendeten Symbolen ($s_1,..,s_k,..,s_{Nt}$) aus von einer Anzahl ($N_r$) von Empfangsantennen jeweils empfangenen Symbolen ($r_1,..,r_k,..,r_{Nr}$) in einem Multi-Layer-Übertragungssystem mit einem Vorfilter (2) zum Vorfiltern der empfangenen Symbole ($r_1,..,r_k,..,r_{Nr}$) mit einer Vorfiltermatrix und einem nachfolgenden Sequenzschätzer (3) zum Schätzen von optimalen Schätzwerten ($\hat{\underline{s}}$) für die gesendeten Symbole ($\underline{s}$) mittels einer Einrichtung zum sukzessiven Berechnen von groben Schätzwerten ($\tilde{s}_k^{(a)}$) für in jedem Pfad ($a$) im Zustands-Diagramm in jedem Layer ($k$) zu schätzende Symbole ($s_k$), mittels einer Einrichtung zum sukzessiven Ermitteln von exakteren Schätzwerten ($\hat{s}_k^{(a)}$) durch Minimierung einer euklidischen Distanz zwischen dem jeweiligen groben Schätzwert ($\tilde{s}_k^{(a)}$) und einer gegenüber der Mächtigkeit ($|S|$) des Symbolalphabets reduzierten Anzahl ($P$) von Symbolhypothesen ($\underline{\underline{S}}_k^{(a)}$), die im Konstellationsdiagramm benachbart zum groben Schätzwert ($\tilde{s}_k^{(a)}$) positioniert sind, und mittels einer Einrichtung zum Detektieren von optimalen Schätzwerten ($\hat{s}_k$) für die in den einzelnen Layern $k$ geschätzten Symbole ($s_k$) aus den exakteren Schätzwerten ($\hat{s}_k^{(a)}$), die zu einem Gesamtpfad im Zustandsdiagramm mit einer minimaler Pfadmetrik ($M^{(a)}$) gehören, wobei der Sequenzschätzer (3) so ausgebildet ist, dass er alle Schritte eines Verfahrens nach einem der Ansprüche 1-6 ausführt.

**Claims**

**1.** Method for detecting, in a multi-layer transmission system, symbols ($s_1,..,s_k,..,s_{Nt}$) which are sent at one instant by a number $N_t$ of transmitting antennas from symbols ($r_1,..,r_k,..,r_{Nr}$) which are received by a number $N_r$ of receiving antennas, comprising the following method steps which are carried out in succession for each layer $k$, starting with the layer $N_t$ and ending with the layer 1:

• calculating a rough estimate ($\tilde{s}_1^{(1)}$) for the symbol ($s_1$) to be estimated in the first layer or a number $M$ of rough estimates ($\tilde{s}_k^{(1)},...,\tilde{s}_k^{(a)},...,\tilde{s}_k^{(M)}$) for the symbol ($s_k$) to be estimated in a layer $k$ as a difference, which is weighted with the inverse diagonal element ($1/R_{k,k}$) of the layer $k$ of a triangulated transmission matrix ($R$), between the received symbols ($r_1,...r_k,..,r_{Nr}$) which are transformed by means of the triangulated transmission matrix ($R$) into the layer $k$ and the more exact estimates ($\hat{s}_1^{(1)},...,\hat{s}_{k-1}^{(1)},...,\hat{s}_1^{(a)},...,\hat{s}_{k-1}^{(a)},...,\hat{s}_1^{(M)},...,\hat{s}_{k-1}^{(M)},...,\hat{s}_{Nt}^{(M)}$) for symbols ($s_{k+1},...,s_{Nt}$) to be estimated in a layer $k + 1$ to $N_t$, which more exact estimates are transformed into the layer $k$ and precede and are already determined in a path a in a phase diagram, phases belonging to the phase diagram resulting from symbol hypotheses $(\overline{\underline{s}}_k^{(a)})$ for the symbols $(s_{k+1},..., s_{Nt})$ to be estimated in the layers $k$,

- determining a Voronoi region $(V(\tilde{s}_k^{(1)}),...,V(\tilde{s}_k^{(a)}),..., V(\hat{s}_k^{(M)})$ in a constellation diagram for each rough estimate $(\tilde{s}_k^{(1)}),...,\tilde{s}_k^{(a)},...,(\hat{s}_k^{(M)})$ which is determined in the layer $k$, in the centre of which Voronoi region the particular rough estimate $(\tilde{s}_k^{(1)}),...,\tilde{s}_k^{(a)},..., \hat{s}_k^{(M)})$ is located, with a number $P$, which is reduced with respect to the number $M$, of symbol hypotheses $(\overline{\underline{s}}_k^{(1)}, ..., \overline{\underline{s}}_k^{(a)},..., \overline{\underline{s}}_k^{(M)})$ for the symbol $(s_k)$ estimated in the layer $k$,

- determining a Euclidean distance $(\underline{d}_k^{\sim(1)},...,\underline{d}_k^{\sim(a)},...,\underline{d}_k^{\sim(M)})$ in each case between each individual rough estimate $(\tilde{s}_k^{(1)},...,\tilde{s}_k^{(a)},..., \tilde{s}_k^{(M)})$ of the symbol $(s_k)$ estimated in the layer $k$ and all of the symbol hypotheses $(\underline{s}_k^{=(1)},...,\underline{sk}^{=(a)},...,\underline{s}_k^{=(M)})$ located in the associated Voronoi region $(V(\tilde{s}_k^{(1)}),..., V(\tilde{s}_k^{(a)}),...,V(\tilde{s}_k^{(M)})$, and determining a path metric $(M_k^{(1)},...,M_k^{(a)},...,M_k^{(M)})$ for each individual symbol hypothesis $(s_k^{=(1)},...,s_k^{=(a)},...,s_k^{=(M)})$ in the layer k by adding the Euclidean distance $(\underline{d}_k^{(1)},...,\underline{d}_k^{(a)},...,\underline{d}_k^{(M)})$ determined in each case and a path metric $(M_{k+1}^{(1)},...,M_{k+1}^{(a)},...,M_{k+1}^{(M)},...,\underline{d}_{Nt}^{(1)},...,\underline{d}_{Nt}^{(a)},...,\underline{d}_{Nt}^{(M)})$ between more exact estimates $(\hat{s}_{k+1}^{(a)},...,\hat{s}_{Nt}^{(a)})$ preceding in the particular path a and rough estimates $(\tilde{s}_{k+1}^{(a)},...,\tilde{s}_{Nt}^{(a)})$ for symbols $(s_{k+1},...,s_{Nt})$ estimated in the layer $k + 1$ to $N_t$,
- determining up to $M$ more exact estimates $(\hat{s}_k^{(1)},...,\hat{s}_k^{(a)},...,\hat{s}_k^{(M)})$ for the symbol $(s_k)$ estimated in the layer $k$, as the symbol hypotheses $(^=s_{k,p}^{(a)})$ belonging to the $M$ smallest path metrics $(^=,M_{k,p}^{(a)})$ in each case, from all path metrics $(\underline{M}_k^{(1)},...,\underline{M}_k^{(a)},...,\underline{M}_k^{(M)})$ calculated in the layer $k$, and
- determining optimum estimates $(\hat{\underline{s}})$ for the symbols $(\underline{s})$ estimated in all layers as the more exact estimates $(\hat{\underline{s}}^{(a)})$ of the symbols $(\underline{s})$ estimated in all layers, which more exact estimates belong to the path a having a minimum path metric $(M_{1,p}^{(a)})$ in the layer 1.

2. Method for detecting, in a multi-layer transmission system, symbols $(s_1,..,s_k,..,s_{Nt})$ which are sent at one instant by a number $N_t$ of transmitting antennas from symbols $(r_1,..,r_k,..,r_{Nr})$ which are received by a number $N_r$ of receiving antennas, comprising the following method steps which are carried out in succession for each layer $k$, starting with the layer $l$ and ending with the layer $N_t$:

- calculating a rough estimate $(\tilde{s}_1^{(1)})$ for the symbol $(s_{Nt})$ to be estimated in the $N_t$-th layer or a number $M$ of rough estimates $(\tilde{s}_k^{(1)},..., \tilde{s}_k^{(a)},...,\tilde{s}_k^{(M)})$ for the symbol $(s_k)$ to be estimated in a layer $k$ as a difference, which is weighted with the inverse diagonal element $(1/R_{k,k})$ of the layer $k$ of a triangulated transmission matrix $(R)$, between the received symbols $(r_1,..,r_k,..,r_{Nr})$ which are transformed by means of the triangulated transmission matrix $(R)$ into the layer $k$ and the more exact estimates $(\hat{s}_1^{(1)},...,\hat{s}_{k-1}^{(1)},..., \hat{s}_1^{(a)},..., \hat{s}_{k-1}^{(a)},..., \hat{s}_1^{(M)},...,\hat{s}_{k-1}^{(M)},..., \hat{s}_{Nt}^{(M)})$ for symbols $(s_1,..,s_{k-1})$ to be estimated in the layer 1 to $k$-1, which more exact estimates are transformed into the layer $k$ and precede and are already determined in a path a in the phase diagram, phases belonging to the phase diagram resulting from symbol hypotheses $(^=,\underline{s}_k^{(a)})$ for the symbols $(s_{k+1},...,s_{Nt})$ to be estimated in the layers $k$,
- determining a Voronoi region $(V(\tilde{s}_k^{(1)}),..., V(\tilde{s}_k^{(a)}),..., V(\tilde{s}_k^{(M)})$ in a constellation diagram for each rough estimate $(\tilde{s}_k^{(1)},..., \tilde{s}_k^{(a)},..., \tilde{s}_k^{(M)})$ which is determined in the layer $k$, in the centre of which Voronoi region the particular rough estimate $(\tilde{s}_k^{(1)},...,\tilde{s}_k^{(a)},...,\tilde{s}_k^{(M)})$ is located, with a number $P$, which is reduced with respect to the number $M$, of symbol hypotheses $(^=,\underline{s}_k^{(1)},...,^=,\underline{s}_k^{(a)},...,^=,\underline{s}_k^{=(M)})$ for the symbol $(s_k)$ estimated in the layer $k$,
- determining a Euclidean distance $(\underline{d}_k^{(1)},...,\underline{d}_k^{(a)},...,\underline{d}_k^{(M)})$ in each case between each individual rough estimate $(\tilde{s}_k^{(1)},..., \tilde{s}_k^{(a)},..., \tilde{s}_k^{(M)})$ of the symbol $(s_k)$ estimated in the layer $k$ and all of the symbol hypotheses $(\overline{\underline{s}}_k^{(1)}, ..., \overline{\underline{s}}_k^{(a)},..., \overline{\underline{s}}_k^{(M)})$ located in the associated Voronoi region $(V(\tilde{s}_k^{(1)}),...,V(\tilde{s}_k^{(a)}),...,V(\tilde{s}_k^{(M)})$, and determining a path metric $(\underline{M}_k^{(1)},...,\underline{M}_k^{(a)},...,\underline{M}_k^{(M)})$ for each individual symbol hypothesis $(^=,\underline{s}_k^{(1)},..., ^=,s_k^{(a)},..., ^=,s_k^{(M)})$ in the layer $k$ by adding the Euclidean distance $(\underline{d}_k^{(1)},...,\underline{d}_k^{(a)},...,\underline{d}_k^{(M)})$ determined in each case and a path metric $(\underline{M}_{k+1}^{(1)},...,\underline{M}_{k+1}^{(a)},...,\underline{M}_{k+1}^{(M)})$ of totalled minimum Euclidean distances $(\underline{d}_1^{(1)},...,\underline{d}_1^{(a)},...,\underline{d}_1^{(M)},...,\underline{d}_{k-1}^{(1)},...,\underline{d}_{k-1}^{(a)},...,\underline{d}_{k-1}^{(M)})$ between more exact estimates $(\hat{s}_1^{(1)},..., \hat{s}_{k-1}^{(a)})$ preceding in the particular path a and rough estimates $(\tilde{s}_1^{(a)},...,\tilde{s}_k^{(a)})$ for symbols $(s_1,..,s_{k-1})$ estimated in the layer 1 to $k$-1,
- determining up to $M$ more exact estimates $(\hat{s}_k^{(1)},...,\hat{s}_k^{(a)},...,\hat{s}_k^{(M)})$ for the symbol $(s_k)$ estimated in the layer $k$, as the symbol hypotheses $(^=,s_{k,p}^{(a)})$ belonging to the $M$ smallest path metrics $(M_{k,p}^{(a)})$ in each case, from all path metrics $(\underline{M}_k^{(1)},...,\underline{M}_k^{(a)},...,\underline{M}_k^{(M)})$ calculated in the layer $k$, and

• determining optimum estimates ($\tilde{\underline{s}}$) for the symbols ($\underline{s}$) estimated in all layers as the more exact estimates ($\hat{\underline{s}}^{(a)}$) of the symbols ($\underline{s}$) estimated in all layers, which more exact estimates belong to the path a having a minimum path metric ($M_{Nt,p}^{(a)}$) in the layer $N_t$.

3. Detection method according to either claim 1 or claim 2, **characterised in that**, in order to establish the received symbols ($r_1,..,r_k,..,r_{Nr}$) which are transformed in the layers 1 to $N_t$, a ($Q·R$-) decomposition takes place of a transmission channel matrix ($H$), between the transmitting antennas and the receiving antennas, into an orthogonal matrix ($Q^H$) and a triangular matrix ($R$), and the received symbols ($r_1,..,r_k,..,r_{Nr}$) are weighted with the orthogonal matrix ($Q^H$).

4. Detection method according to claim 3, **characterised in that**, in order to establish the more exact estimates ($\hat{s}_1^{(1)},...,$ $\hat{s}_{k-1}^{(1)},...,\hat{s}_1^{(2)},...,\hat{s}_{k-1}^{(2)},...,\hat{s}_1^{(M)},..., \hat{s}_{k-1}^{(M)},..., (\hat{\underline{s}}_{Nt}^{(M)})$) which are transformed in the layers 1 to $N_t$, the more exact estimates ($\hat{s}_1^{(1)},...,\hat{s}_{k-1}^{(1)},...,\hat{s}_1^{(2)},...,\hat{s}_{k-1}^{(2)},..., \hat{s}_1^{(M)},..., \hat{s}_{k-1}^{(M)},..., \hat{s}_{Nt}^{(M)}$) which precede and are already determined in a path a in the phase diagram are weighted with row elements ($R_{v,v}$) of the triangular matrix ($R$) which belong to the particular layer.

5. Detection method according to any of claims 1 to 4, **characterised in that** the number $M$ of rough estimates ($\tilde{s}_k^{(1)},...,$ $\tilde{s}_k^{(M)}$) to be calculated for the symbol ($s_k$) sent in the particular layer $k$ corresponds to the power ($|A|$) of the symbol alphabet used.

6. Detection method according to either claim 3 or claim 4, **characterised in that** the number $M$ of rough estimates ($\tilde{s}_k^{(1)},..., \tilde{s}_k^{(M)}$) for the symbol ($s_k$) sent in the particular layer $k$ is a number $M_k$ of rough estimates ($\tilde{s}_k^{(1)},..., \tilde{s}_k^{(M)}$) which is dependent on the particular layer $k$ and is indirectly proportional to the diagonal element $R_{k,k}$ of the layer $k$ in the triangular matrix $R$, the number $M_k$ of rough estimates ($\tilde{s}_k^{(1)},..., \tilde{s}_k^{(M)}$) which is dependent on the particular layer $k$ being calculated according to the following mathematical formula:

$$M_k := N_B \cdot \frac{1/R_{k,k}}{\sum_{i=1}^{N_t} 1/R_{i,i}}$$

wherein $N_B$ is the total of the Euclidean distances to be calculated in all layers.

7. Device for detecting, in a multi-layer transmission system, symbols ($s_1,...,s_k,...,s_{Nt}$) which are sent at one instant by a number ($N_t$) of transmitting antennas from symbols ($r_1,...,r_k,...,r_{Nr}$) which are received by a number ($N_r$) of receiving antennas, comprising a prefilter (2) for prefiltering the received symbols ($r_1,...,r_k,...,r_{Nr}$) using a prefilter matrix and comprising a subsequent sequence estimator (3) for estimating optimum estimates ($\tilde{\underline{s}}$) for the sent symbols ($\underline{s}$) by means of an apparatus for calculating in succession rough estimates ($\tilde{s}_k^{(a)}$) for symbols ($s_k$) to be estimated in each path ($\alpha$) in the phase diagram in each layer ($k$), by means of an apparatus for determining in succession more exact estimates ($\hat{s}^{(a)}$) by minimising a Euclidean distance between the particular rough estimate ($\tilde{s}_k^{(a)}$) and a number ($P$), which is reduced with respect to the power ($|S|$) of the symbol alphabet, of symbol hypotheses ($\overline{\overline{\underline{s}}}_k^{(a)}$) which are positioned adjacent to the rough estimate ($\tilde{s}_k^{(a)}$) in the constellation diagram, and by means of an apparatus for detecting optimum estimates ($\hat{s}_k$) for the symbols ($s_k$) estimated in the individual layers $k$ from the more exact estimates ($\hat{s}_k^{(a)}$) which belong to a complete path in the phase diagram having a minimum path metric ($\underline{M}^{(a)}$), the sequence estimator (3) being configured in such a way as to execute all steps of a method according to any of claims 1-6.

**Revendications**

1. Procédé de détection de symboles (**$s_1,..,s_k,..,s_{Nt}$**) respectivement émis à un moment par un nombre **$N_t$** d'antennes émettrices à partir de symboles (**$r_1,..,r_k,..,r_{Nr}$**) respectivement reçus par un nombre **$N_r$** d'antennes réceptrices dans un système de transmission multicouches, présentant les phases de procédé suivantes exécutées successivement pour chaque couche $k$, en commençant par la couche $N_t$ et en terminant par la couche **1** :

• calcul d'une valeur estimée grossière $(\tilde{s}_1^{(1)})$ pour le symbole $(s_1)$ à estimer dans la première couche, ou d'un nombre $M$ de valeurs estimées grossières $(\tilde{s}_k^{(1)},...,\tilde{s}_k^{(a)},...,\tilde{s}_k^{(M)})$ pour le symbole $(s_k)$ à estimer dans une couche $k$, en tant que différence pondérée par l'élément diagonal inverse $(1/R_{k,k})$ de la couche $k$ d'une matrice de transmission $(R)$ triangularisée, entre les symboles $(r_1,..,r_k,..,r_{N_r})$ reçus transformés dans la couche $k$ au moyen de la matrice de transmission $(R)$ triangularisée et les valeurs estimées $(\hat{s}_k^{(1)},...,\hat{s}_{k-1}^{(1)},..., \hat{s}_k^{(a)},..,\hat{s}_{k-1}^{(a)},...,\hat{s}_1^{(M)},...,\hat{s}_{k-1}^{(M)}..,\hat{s}_{N_r}^{(M)})$ plus exactes transformées dans la couche $k$, antérieures dans un chemin a respectif d'un diagramme d'état et déjà déterminées, pour des symboles $(s_{k+1},..,s_{N_t})$ à estimer dans une couche $k+1$ à $N_t$, les états relevant du diagramme d'état résultant d'hypothèses symboliques $(\bar{\bar{s}}_t^{(a)})$ pour les symboles $(s_{k+1},..,s_{N_t})$ à estimer respectivement dans les couches $k$,

• détermination d'une région de Voronoï $(V(\tilde{s}_k^{(1)}),...,V(\tilde{s}_k^{(a)}),...,V(\tilde{s}_k^{(M)}))$ dans un diagramme de constellation pour chaque valeur estimée grossière $(\tilde{s}_k^{(1)},...,\tilde{s}_k^{(a)},...,\tilde{s}_k^{(M)})$ déterminée dans la couche $k$, au centre de laquelle est située ladite valeur estimée grossière $(\tilde{s}_k^{(1)},...,\tilde{s}_k^{(a)},...,\tilde{s}_k^{(M)})$, avec un nombre $P$ d'hypothèses symboliques $(\bar{\bar{s}}_t^{(1)},..,\bar{\bar{s}}_t^{(a)},..,\bar{\bar{s}}_t^{(M)})$ réduit par rapport au nombre $M$ pour le symbole $(s_k)$ estimé dans la couche $k$,

• détermination d'une distance euclidienne $(\underline{d}_k^{(1)},..,\underline{d}_k^{(a)},..,\underline{d}_k^{(M)})$ respective entre chaque valeur estimée grossière $(\tilde{s}_k^{(1)},...,\tilde{s}_k^{(a)},...,\tilde{s}_k^{(M)})$ différente du symbole $(s_k)$ estimé dans la couche $k$ et toutes les hypothèses symboliques $(\bar{\bar{s}}_t^{(1)},..,\bar{\bar{s}}_t^{(a)},..,\bar{\bar{s}}_t^{(M)})$ situées dans la région de Voronoï $(V(\tilde{s}_k^{(1)}),...,V(\tilde{s}_k^{(a)}),...,V(\tilde{s}_k^{(M)}))$ correspondante, et détermination d'une métrique de chemin $(M_k^{(1)},..,M_k^{(a)},..,M_k^{(M)})$ pour chaque hypothèse symbolique $(\bar{\bar{s}}_t^{(1)},..,\bar{\bar{s}}_t^{(a)},..,\bar{\bar{s}}_t^{(M)})$ différente dans la couche $k$ par addition de la distance euclidienne $(\underline{d}_k^{(1)},..,\underline{d}_k^{(a)},..,\underline{d}_k^{(M)})$ respective déterminée et d'une métrique de chemin $(\underline{M}_{k+1}^{(1)},..,\underline{M}_{k+1}^{(a)},..,\underline{M}_{k+1}^{(M)})$ résultant de distances euclidiennes minimales $(\underline{d}_{k+1}^{(1)},..,\underline{d}_{k+1}^{(a)},..,\underline{d}_{k+1}^{(M)},..,\underline{d}_{N_t}^{(1)},..,\underline{d}_{N_t}^{(a)},..,\underline{d}_{N_t}^{(M)})$ totalisées, entre des valeurs estimées $(\hat{s}_{k+1}^{(a)},...\hat{s}_{kt}^{(a)})$ plus exactes antérieures dans le chemin a respectif et des valeurs estimées grossières $(\tilde{s}_{k+1}^{(a)},...,\tilde{s}_{Nt}^{(a)})$ pour des symboles $(s_{k+1},..,s_{N_t})$ estimées dans la couche $k+1$ à $N_t$,

• détermination de jusqu'à $M$ valeurs estimées $(\hat{s}_k^{(1)},...\hat{s}_k^{(a)},...,\hat{s}_k^{(M)})$ plus exactes pour le symbole $(s_k)$ estimé dans la couche $k$, en tant qu'hypothèses symboliques $(\tilde{s}_{k,p}^{(a)})$ appartenant aux $M$ métriques de chemin $(M_{k,p}^{(a)})$ minimales respectives, à partir de toutes les métriques de chemin $(\underline{M}_k^{(1)},..,\underline{M}_k^{(a)},..,\underline{M}_k^{(M)})$ calculées dans la couche $k$, et

• détermination de valeurs estimées $(\hat{\underline{s}})$ optimales pour les symboles $(\underline{s})$ estimés dans toutes les couches, en tant que valeurs estimées $(\hat{\underline{s}}^{(a)})$ plus exactes des symboles $(\underline{s})$ estimés dans toutes les couches appartenant au chemin a à métrique de chemin $(M_{l,p}^{(a)})$ minimale dans la couche **1**.

2. Procédé de détection de symboles $(s_1,..,s_k,..,s_{N_t})$ respectivement émis à un moment par un nombre $N_t$ d'antennes émettrices à partir de symboles $(r_1,..,r_k,..,r_{N_r})$ respectivement reçus par un nombre $N_r$ d'antennes réceptrices dans un système de transmission multicouches, présentant les phases de procédé suivantes exécutées successivement pour chaque couche $k$, en commençant par la couche **1** et en terminant par la couche $N_t$ :

• calcul d'une valeur estimée grossière $(\tilde{s}_{N_t}^{(1)})$ pour le symbole $(s_{N_t})$ à estimer dans la $N_t$ ième couche, ou d'un nombre $M$ de valeurs estimées grossières $(\tilde{s}_k^{(1)},...,\tilde{s}_k^{(a)},...,\tilde{s}_k^{(M)})$ pour le symbole $(s_k)$ à estimer dans une couche $k$, en tant que différence pondérée par l'élément diagonal inverse $(1/R_{k,k})$ de la couche $k$ d'une matrice de transmission $(R)$ triangularisée, entre les symboles $(r_1,..,r_k,..,r_{N_r})$ reçus transformés dans la couche $k$ au moyen de la matrice de transmission $(R)$ triangularisée et les valeurs estimées $(\hat{s}_k^{(1)},...,\hat{s}_{k-1}^{(1)},..., \hat{s}_k^{(a)},..,\hat{s}_{k-1}^{(a)},...,\hat{s}_1^{(M)},...,\hat{s}_{k-1}^{(M)}..,\hat{s}_{N_r}^{(M)})$ plus exactes transformées dans la couche k, antérieures dans un chemin a respectif du diagramme d'état et déjà déterminées, pour des symboles $(s_{k+1},..,s_{N_t})$ à estimer dans la couche 1 à $k$-1, les états relevant du diagramme d'état résultant d'hypothèses symboliques $(\bar{\bar{s}}_t^{(a)})$ pour les symboles $(s_{k+1},..,s_{N_t})$ à estimer respectivement dans les couches $k$,

• détermination d'une région de Voronoï $(V(\tilde{s}_k^{(1)}),..., V(\tilde{s}_k^{(a)}),...,V(\tilde{s}_k^{(M)}))$ dans un diagramme de constellation pour chaque valeur estimée grossière $(\tilde{s}_k^{(1)},...,(\tilde{s}_k^{(a)},...,(\tilde{s}_k^{(M)})$ déterminée dans la couche $k$, au centre de laquelle est située ladite valeur estimée grossière $((\tilde{s}_k^{(1)},...,(\tilde{s}_k^{(a)},...,(\tilde{s}_k^{(M)})$, avec un nombre $P$ d'hypothèses symboliques $(\overline{\overline{s}}_k^{(1)},...,\overline{\overline{s}}_k^{(a)},...,\overline{\overline{s}}_k^{(M)})$ réduit par rapport au nombre $M$ pour le symbole $(s_k)$ estimé dans la couche $k$,

• détermination d'une distance euclidienne $(\underline{d}_k^{(1)},..,\underline{d}_k^{(a)},..,\underline{d}_k^{(M)})$ respective entre chaque valeur estimée grossière $(\tilde{s}_k^{(1)},...,(\tilde{s}_k^{(a)},...,(\tilde{s}_k^{(M)})$ différente du symbole $(s_k)$ estimé dans la couche $k$ et toutes les hypothèses symboliques $(\overline{\overline{s}}_k^{(1)},...,\overline{\overline{s}}_k^{(a)},...,\overline{\overline{s}}_k^{(M)})$ situées dans la région de Voronoï $(V(\tilde{s}_k^{(1)},...,V(\tilde{s}_k^{(a)},...,V(\tilde{s}_k^{(M)}))$ correspondante, et détermination d'une métrique de chemin $(\underline{M}_k^{(1)},..,\underline{M}_k^{(a)},..,\underline{M}_k^{(M)})$ pour chaque hypothèse symbolique $(\overline{\overline{s}}_k^{(1)},...,\overline{\overline{s}}_k^{(a)},...,\overline{\overline{s}}_k^{(M)})$ différente dans la couche $k$ par addition de la distance euclidienne $(\underline{d}_k^{(1)},..,\underline{d}_k^{(a)},..,\underline{d}_k^{(M)})$ respective déterminée et d'une métrique de chemin $(\underline{M}_{k-1}^{(1)},..,\underline{M}_{k-1}^{(a)},..,\underline{M}_{k-1}^{(M)})$ résultant de distances euclidiennes minimales $(\underline{d}_1^{(1)},..,\underline{d}_1^{(a)},..,\underline{d}_1^{(M)},d_{k-1}^{(1)},..,\underline{d}_{k-1}^{(a)},..,\underline{d}_{k-1}^{(M)})$ totalisées, entre des valeurs estimées $(\hat{s}_k^{(a)},...,\hat{s}_{k-1}^{(a)})$ plus exactes antérieures dans le chemin a respectif et des valeurs estimées grossières $(\tilde{s}_1^{(a)},...,\tilde{s}_{k-1}^{(a)})$ pour des symboles $(s_1,..,s_{k-1})$ estimés dans la couche **1** à $k$-1,

• détermination de jusqu'à $M$ valeurs estimées $(\hat{s}_k^{(1)},...,\hat{s}_k^{(a)}..,\hat{s}_k^{(M)})$ plus exactes pour le symbole $(s_k)$ estimé dans la couche $k$, en tant qu'hypothèses symboliques $(\overline{\overline{s}}_{k,p}^{(a)})$ appartenant aux $M$ métriques de chemin $(M_{k,p}^{(a)})$ minimales respectives, à partir de toutes les métriques de chemin $(\underline{M}_k^{(1)},..,\underline{M}_k^{(a)},..,\underline{M}_k^{(M)})$ calculées dans la couche $k$, et

• détermination de valeurs estimées $(\hat{\underline{s}})$ optimales pour les symboles $(\underline{s})$ estimés dans toutes les couches, en tant que valeurs estimées $(\hat{\underline{s}}^{(a)})$ plus exactes des symboles $(\underline{s})$ estimés dans toutes les couches appartenant au chemin a à métrique de chemin $(M_{N_t,p}^{(a)})$ minimale dans la couche $N_t$.

3. Procédé de détection selon la revendication 1 ou 2,
**caractérisé en ce que**,
pour la détermination des symboles $(r_1,..,r_k,..,r_N)$ reçus transformés dans les couches 1 à $N_t$, il est procédé à une factorisation $(Q·R-)$ d'une matrice de canal de transmission $(H)$ entre les antennes émettrices et les antennes réceptrices vers une matrice $(Q^H)$ orthogonale et une matrice triangulaire $(R)$, et à une pondération des symboles $(r_1,..,r_k,..,r_{N_r})$ reçus par la matrice $(Q^H)$ orthogonale.

4. Procédé de détection selon la revendication 3,
**caractérisé en ce que**,
pour la détermination des valeurs estimées $(\hat{s}_1^{(1)},..,\hat{s}_{k-1}^{(1)},\hat{s}_1^{(2)},..,\hat{s}_{k-1}^{(2)},...,\hat{s}_1^{(M)},...,\hat{s}_{k-1}^{(M)},..\hat{s}_{N_t}^{(M)})$ plus exactes respectivement transformées dans les couches **1** à $N_t$, il est procédé à une pondération des valeurs estimées $(\hat{s}_1^{(1)},..,\hat{s}_{k-1}^{(1)},\hat{s}_1^{(2)},..,\hat{s}_{k-1}^{(2)},...,\hat{s}_1^{(M)},...,\hat{s}_{k-1}^{(M)},..\hat{s}_{N_t}^{(M)})$ plus exactes antérieures dans un chemin a respectif du diagramme d'état et déjà déterminées par des éléments linéaires $(R_{v,v})$ de la matrice triangulaire $(R)$ appartenant aux couches correspondantes.

5. Procédé de détection selon l'une des revendications 1 à 4,
**caractérisé en ce que**
le nombre $M$ de valeurs estimées grossières $(\tilde{s}_k^{(1)},..,\tilde{s}_k^{(M)})$ à calculer pour le symbole $(s_k)$ émis dans la couche $k$ respective correspond au cardinal $(|A|)$ de l'alphabet symbolique utilisé.

6. Procédé de détection selon la revendication 3 ou 4,
**caractérisé en ce que**
le nombre $M$ de valeurs estimées grossières $(\tilde{s}_k^{(1)},..,\tilde{s}_k^{(M)})$ pour le symbole $(s_k)$ émis dans la couche k respective est un nombre $M_{k'}$ de valeurs estimées grossières $(\hat{s}_k^{(1)},..,\hat{s}_k^{(M)})$ dépendant de la couche $k$ respective, lequel est indirectement proportionnel à l'élément diagonal $R_{k,k}$ de la couche $k$ dans la matrice triangulaire $R$, ledit nombre $M_{k'}$ de valeurs estimées grossières $(\tilde{s}_k^{(1)},..,\tilde{s}_k^{(M)})$ dépendant de la couche $k$ respective étant calculé conformément à la formule mathématique suivante :

$$M_{k\cdot} = N_B \cdot \frac{1/R_{k,k}}{\sum_{i=1}^{N_t} 1/R_{i,i}}$$

où
$N_B$ est le nombre total des distances euclidiennes à calculer dans toutes les couches.

7. Dispositif pour la détection de symboles $(s_1,..,s_k,..,s_{N_t})$ respectivement émis à un moment par un nombre $N_t$ d'antennes émettrices à partir de symboles $(r_1,..,r_k,..,r_{N_r})$ respectivement reçus par un nombre $N_r$ d'antennes réceptrices dans un système de transmission multicouches, avec un pré-filtre (2) pour le filtrage préalable des symboles $(r_1,..,r_k,..,r_{N_r})$ reçus avec une matrice de pré-filtre et un estimateur séquentiel (3) consécutif pour l'estimation de valeurs estimées $(\hat{\underline{s}})$ optimales pour les symboles $(\underline{s})$ émis au moyen d'un dispositif pour le calcul successif de valeurs estimées $(\tilde{s}_k^{(a)})$ grossières pour des symboles $(s_k)$ à estimer dans chaque couche $(k)$, dans chaque chemin $(a)$ du diagramme d'état, au moyen d'un dispositif pour la détermination successive de valeurs estimées $(\hat{s}_k^{(a)})$ plus exactes par minimisation d'une distance euclidienne entre la valeur estimée $(\tilde{s}_k^{(a)})$ grossière respective et un nombre $(P)$, réduit par rapport au cardinal $(|S|)$ de l'alphabet symbolique d'hypothèses symboliques $(\overline{\overline{s}}_k^{(a)})$, positionnées de manière contiguë à la valeur estimée $(\tilde{s}_k^{(a)})$ grossière dans le diagramme d'état, et au moyen d'un dispositif pour la détection de valeurs estimées $(\tilde{s}_k)$ optimales pour les symboles $(s_k)$ estimés dans les différentes couches $k$, à partir des valeurs estimées $(\hat{s}_k^{(a)})$ plus exactes appartenant à un chemin global à métrique de chemin $(\underline{M}^{(a)})$ minimale dans le diagramme d'état,
l'estimateur séquentiel (3) étant réalisé de manière à exécuter toutes les phases d'un procédé selon l'une des revendications 1 à 6.

r:  Schätzwert:

r (i)    $\hat{s}_3$

$\hat{s}_2$

$\hat{s}_1$

Legende:

———▷ : potentieller und berechneter Zweig

———▶ : detektierter und berechneter Zweig

②    : Zustand / Hypothese

Fig. 1

Fig. 2

**Start**

S10 — Berechnen von groben Schätzwerten $\tilde{s}_k^{(a)}$ für das im Layer K gesendete Symbol $s_k$ aus der Entzerrung von in dem Layer K transformierten empfangenen Symbolen $\underline{r}$ von zum jeweiligen Pfad a gehörigen, bereits ermittelten und in den Layer K transformierten exakteren Schätzwerten $\hat{s}_{k+1}^{(a)} .. \hat{s}_{N_t}^{(a)}$ für in den Layern K+1 bis $N_t$ gesendete Symbole $s_{k+1}$ bis $s_{N_t}$

S20 — Ermitteln einer Voroni-Region $V(\tilde{s}_k^{(a)})$ für jeden im Layer ermittelten groben Schätzwert $\tilde{s}_k^{(a)}$, in dessen Zentrum der grobe Schätzwert $\tilde{s}_k^{(a)}$ positioniert ist, mit einer reduzierten Anzahl P von Symbolhypothesen $\overline{\overline{s}}_k^{(a)}$ für das im Layer K gesendete Symbol $s_k$

S30 — Ermitteln von euklidischen Distanzen $\underline{d}_k^{(a)}$ zwischen jedem im Layer K ermittelten groben Schätzwerten $\tilde{s}_k^{(a)}$ und allen in der zugehörigen Voronoi-Region $V(\tilde{s}_k^{(a)})$ gelegenen Symbolhypothesen $\overline{\overline{s}}_k^{(a)}$

S40 — Ermitteln einer Pfadmetrik $M_{k,p}^{(a)}$ für jede in der Voronoi-Region des jeweiligen groben Schätzwerts $\tilde{s}_k^{(a)}$ gelegene Symbolhypothese $\overline{\overline{s}}_{k,p}^{(a)}$ durch Addieren der jeweils ermittelten euklidischen Distanz $d_{k,p}^{(a)}$ und der Pfadmetrik $M_{k+1,p}^{(a)}$ aus aufsummierten minimalen euklidischen Distanzen zwischen der zum jeweiligen Pfad a gehörigen exakteren Schätzwerten $\hat{s}_{k+1}^{(a)} .. \hat{s}_{N_t}^{(a)}$ und groben Schätzwerten $\tilde{s}_{k+1}^{(a)} .. \tilde{s}_{N_t}^{(a)}$ für im Layer K+1 bis $N_t$ jeweils gesendete Symbole $s_{k+1} .. s_{N_t}$

S50 — Ermitteln von bis zu M exakteren Schätzwerten $\hat{s}_k^{(a)}$ im Layer K als diejenige Symbolhypothese $\overline{\overline{s}}_{k,p}^{(a)}$, die eine zu dem M Kleinsten zählende Pfadmetrik $M_{k,p}^{(a)}$ aus allen im Layer K berechneten Pfadmetriken aufweist

S60 — Ermitteln der optimalen Schätzwerte $\hat{s}$ für die in allen Layern gesendeten Symbole $s$ als die zum Pfad a mit minimaler Pfadmetrik $\overline{M}_{1,p}^{(a)}$ im ersten Layer gehörigen exakteren Schätzwerte $\hat{s}^{(a)}$ der in allen Layern gesendeten Symbole $\underline{s}$

**Ende**

## Fig. 3A

Start

S100 — Berechnen von groben Schätzwerten $\tilde{s}_k^{(a)}$ für das im Layer K gesendete Symbol $s_k$ aus der Entzerrung von in dem Layer K transformierten empfangenen Symbolen $\underline{r}$ von zum jeweiligen Pfad a gehörigen, bereits ermittelten und in den Layer K transformierten exakteren Schätzwerten $\hat{s}_1^{(a)} .. \hat{s}_{k-1}^{(a)}$ für in den Layern 1 bis K-1 gesendete Symbole $s_1$ bis $s_{k-1}$

S110 — Ermitteln einer Voroni-Region $V(\tilde{s}_k^{(a)})$ für jeden im Layer ermittelten groben Schätzwert $\tilde{s}_k^{(a)}$, in dessen Zentrum der grobe Schätzwert $\tilde{s}_k^{(a)}$ positioniert ist, mit einer reduzierten Anzahl P von Symbolhypothesen $\bar{\bar{s}}_k^{(a)}$ für das im Layer K gesendete Symbol $s_k$

S120 — Ermitteln von euklidischen Distanzen $\underline{d}_k^{(a)}$ zwischen jedem im Layer K ermittelten groben Schätzwerten $\tilde{s}_k^{(a)}$ und allen in der zugehörigen Voronoi-Region $V(\tilde{s}_k^{(a)})$ gelegenen Symbolhypothesen $\bar{\bar{s}}_k^{(a)}$

S130 — Ermitteln einer Pfadmetrik $M_{k,p}^{(a)}$ für jede in der Voronoi-Region des jeweiligen groben Schätzwerts $\tilde{s}_k^{(a)}$ gelegene Symbolhypothese $\bar{\bar{s}}_{k,p}^{(a)}$ durch Addieren der jeweils ermittelten euklidischen Distanz $d_{k,p}^{(a)}$ und der Pfadmetrik $M_{k-1,p}^{(a)}$ aus aufsummierten minimalen euklidischen Distanzen zwischen der zum jeweiligen Pfad a gehörigen exakteren Schätzwerten $\hat{s}_1^{(a)} .. \hat{s}_{k-1}^{(a)}$ und groben Schätzwerten $\tilde{s}_1^{(a)} .. \tilde{s}_{k-1}^{(a)}$ für im Layer 1 bis K-1 jeweils gesendete Symbole $s_1 .. s_{k-1}$

S140 — Ermitteln von bis zu M exakteren Schätzwerten $\hat{s}_k^{(a)}$ im Layer K als diejenige Symbolhypothese $\bar{\bar{s}}_{k,p}^{(a)}$, die eine zu dem M Kleinsten zählende Pfadmetrik $M_{k,p}^{(a)}$ aus allen im Layer K berechneten Pfadmetriken aufweist

S150 — Ermitteln der optimalen Schätzwerte $\hat{\underline{s}}$ für die in allen Layern gesendeten Symbole $\underline{s}$ als die zum Pfad a mit minimaler Pfadmetrik $M_{Nt,p}^{(a)}$ im ersten Layer gehörigen exakteren Schätzwerte $\hat{\underline{s}}^{(a)}$ der in allen Layern gesendeten Symbole $\underline{s}$

Ende

# Fig. 3B

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1246418 A2

**In der Beschreibung aufgeführte Nicht-Patentliteratur**

- **D.L. MILLINER et al.** A layer adaptive M algorithm for multiple-input multiple-output channel detection. *8th IEEE Workshop on Signal Processing Advances in Wireless Communications,* 2007
- QRD Based Tree Search Data Dtection for MIMO Communication Systems. **W.J. CHIN.** 61th IEEE Vehicular Technology Conference. Spring, 2005, vol. 3, 1624-1627
- Performance Analysis of a Fixed-complexity a Sphere Decoder in High-Dimensional MIMO Systems. **L.G. BARBERO et al.** International IEEE Conference on Acoustics, Speech and Signal Proceedings. IEEE, 01. Januar 2006, IV 557-IV 559